# FASCICULE DE BREVET EUROPEEN

(11) **EP 4 044 802 B1**
(45) Date de publication et mention de la délivrance du brevet: **06.12.2023**
(21) Numéro de dépôt: 20781575.4
(22) Date de dépôt: 06.10.2020
(51) Int. Cl.: A01N 1/02, B25J 9/02, B25J 9/04, B25J 21/00

(54) **INSTALLATION DE MANIPULATION ET DE STOCKAGE D'ÉCHANTILLONS BIOLOGIQUES À TRÈS BASSES TEMPÉRATURES, COMPRENANT AU MOINS UN ROBOT CARTÉSIEN ET UN ROBOT À AU MOINS CINQ AXES**
ANLAGE ZUM HANDHABEN UND LAGERN VON BIOLOGISCHEN PROBEN BEI SEHR NIEDRIGEN TEMPERATUREN, DIE MINDESTENS EINEN KARTESISCHEN ROBOTER UND EINEN ROBOTER MIT MINDESTENS FÜNF ACHSEN UMFASST
INSTALLATION FOR HANDLING AND STORING BIOLOGICAL SAMPLES AT VERY LOW TEMPERATURES, COMPRISING AT LEAST ONE CARTESIAN ROBOT AND ONE AT LEAST FIVE-AXIS ROBOT

(30) Priorité: 15.10.2019 FR 1911493
(43) Date de publication de la demande: 24.08.2022
(73) Titulaire: Irelec, 38400 Saint-Martin-D'Heres (FR)
(72) Inventeur: CUNRATH, Aymeric, 38570 Le Cheylas (FR); DECOLIN, Eric, 38570 La Pierre (FR); DISERBO, Vincent, 38000 Grenoble (FR); HEBERT, Guillaume, 38700 La Tronche (FR); MICHEL, Alain, 38320 Eybens (FR); MUNSCH, Thierry, 38180 Seyssins (FR)
(74) Mandataire: Cabinet Nony
(86) Numéro de dépôt international: PCT/EP2020/077978
(87) Numéro de publication internationale: WO 2021/073954

(56) Documents cités:
- EP-A2- 2 169 405
- CN-U- 206 427 590
- FR-A1- 3 052 230
- US-A1- 2019 293 344

## Description

### Domaine technique

La présente invention concerne le domaine des installations usuellement appelées « bio-banques », qui permettent le stockage d'échantillons biologiques d'origine humaine, animale, végétale ou environnementale à très basses températures et notamment dans des conditions cryogéniques, grâce en particulier à de l'azote liquide ou gazeux en tant que source de froid.

Elle a trait plus particulièrement aux bio-banques automatisées, c'est-à-dire dans lesquelles la manipulation des échantillons stockés, des boîtes (« cryoboxes » en anglais) contenant des échantillons et des racks (« cryoracks » en anglais ») contenant les boîtes sont réalisées sans l'intervention d'un opérateur.

L'invention vise plus particulièrement à améliorer ce type de bio-banques, notamment en permettant d'utiliser les récipients de stockage des échantillons déjà présents dans le commerce, comme les cryo conservateurs (récipients de cryopréservation), les récipients de type Dewar, les cuves isolées sous vide ou les congélateurs cryogéniques.

Bien que décrite en référence à une application préférée d'utilisation de récipients de stockage cryogéniques du commerce, l'invention peut s'appliquer à tous types de récipients de stockage.

En outre, bien que décrite en référence à une application préférée dans laquelle les échantillons biologiques sont contenus dans des tubes de conservation (cryotubes, cryovials ou tubes de stockage d'échantillon), l'invention peut aussi s'appliquer à des boites de rangement contenant des échantillons d'origine humaine, animale, végétale ou environnementale.

### Technique antérieure

Dans les bio-banques conventionnelles, les conteneurs d'échantillons biologiques sont stockés dans des récipients refroidis par de l'azote liquide (stockage en phase sèche, en phase gazeuse ou en phase liquide), typiquement dans une gamme de températures allant de -150°C à -196°C, de préférence de température inférieure à - 80°C, et leur manipulation, c'est-à-dire leur chargement/déchargement d'un récipient est assurée manuellement par un opérateur. Les avantages de telles bio-banques sont le coût d'investissement minimal, une flexibilité d'utilisation avec peu de maintenance à réaliser.

Cependant, elles présentent des inconvénients importants dont la gestion des échantillons qui se fait par définition manuellement avec les risques d'erreur de manipulation afférents, la traçabilité des échantillons qui n'est sûre à 100% et enfin, pour les opérateurs, les risques d'anoxie liés à l'environnement cryogénique (présence d'azote liquide), le manque d'ergonomie et le niveau d'efforts à fournir pour soulever les rangements depuis un récipient de stockage (poids important, phénomène d'adhésion dû au froid), ainsi que les risques de brûlure dues aux possible projections d'azote.

Différentes tentatives d'automatisation de bio-banques ont déjà été réalisées.

Bon nombre de demandes de brevet divulguent des solutions de bio-banques automatisées, que l'on peut classer en fonction du type de robot/système robotisé et du ou des systèmes de déplacement des échantillons mis en oeuvre.

On peut citer ainsi des demandes portant sur des bio-banques qui mettent en oeuvre des carrousels avec vérins de poussée/extraction.

La demande de brevet EP2492663A1 concerne un système permettant de recevoir, stocker et distribuer des échantillons. Un stockeur cryogénique est équipé d'un carrousel motorisé permettant d'orienter un rack à la verticale d'un élévateur motorisé. Un actionneur permet d'extraire ou de placer un support échantillons placé dans le rack. Aucune mention n'est faite sur la manière de loger les échantillons à l'intérieur des conteneurs. Le système décrit ne permet pas, d'extraire les échantillons à l'unité ni d'utiliser des cryo-conservateurs du commerce, car les cryo-conservateurs mise en oeuvre doivent être adaptés pour être compatibles avec le système d'automatisation.

Certaines demandes de brevet divulguent des bio-banques à robots de type six axes.

FR3052230 décrit une pièce de stockage de produits à des températures cryogéniques, comprenant plusieurs cuves isolées sous vide et un robot de type 6 axes placé sur un chariot motorisé autonome (guidé sans fil) qui peut se déplacer vers la cuve souhaitée en fonction du besoin. A la lecture de cette demande de brevet, plusieurs informations sont manquantes : en effet, aucune explication n'est donnée sur la façon d'extraire les colonnes (« racks ») de rangement des cuves de stockage cryogénique, ni sur la façon d'extraire les boites contenant les tubes d'échantillons à conserver, ni sur le retrait des couvercles de celles-ci, ni sur la préhension proprement dite des tubes. En outre, il n'est pas précisé comment les tubes d'échantillons sont transférés vers une zone accessible par un opérateur.

US2018/0202908 divulgue un système automatisé pour extraire des échantillons placés sur des portions de disques placées à l'intérieur de cuve de conservation cryogénique à carrousel interne tournant. Les échantillons sont placés verticalement sur des plateaux répartis sur un disque recouvrant le diamètre intérieur d'une cuve cryogénique. Un robot 6 axes, placé lui-même dans une chambre maintenue à basse température, typiquement inférieure à 5°C, et dans un environnement à faible taux d'humidité, permet de prélever des échantillons placés sur les plateaux récupérés.

On peut citer également certaines demandes relatives à des installations avec robot cartésien. KR2014009810 concerne une bio-banque dont l'extraction de rack placés dans des conteneurs cryogéniques non standard est automatisée à l'aide d'un robot cartésien. Des actionneurs embarqués sur le robot cartésien, permettent d'extraire les supports d'échantillons logés dans le rack manipulé. Aucune manipulation des tubes d'échantillons n'est prévue dans l'installation puisque ces derniers ne peuvent être enlevés qu'à la main.

WO2011/047710 décrit un système automatisé d'extraction de plaques-support d'échantillons conservés à une température de -90°C. Le système met en oeuvre un robot cartésien, qui ne permet pas d'utiliser des cryo-conservateurs du commerce.

US9174790 concerne un système avec un robot cartésien qui se déplace au-dessus de deux rangées de cryo-conservateurs à carrousel interne tournant, le tout étant agencé dans une salle froide (chambre climatisée, 0°C, -20°C ou -50°C) en atmosphère inertée. Le système divulgué ne semble pas adapté à la modification d'installations existantes.

CN105857937 divulgue un système avec un robot cartésien dont l'axe longitudinal de déplacement est placé au sol le long d'une rangée de cryo-conservateurs (cuves), et qui embarque des moyens pour soulever des colonnes de rangement (racks) d'échantillons, d'extraire à l'unité une boite de conditionnement d'un rack et d'en transférer les échantillons vers une boite destinée à faire la navette entre les cryo-conservateurs, cette dernière étant accessible depuis l'extérieur via une trappe. Le système de manipulation automatique qui se positionne au-dessus d'un récipient de stockage est composé de six axes motorisés, selon une combinaison d'axes linéaires, placés dans un carter (à priori étanche) pouvant être refroidi par des injecteurs LN2. Un actionneur hydraulique dont l'axe est vertical permet de soulever le système de manipulation (racks, boites et échantillons) et de l'emboiter sur le dessus de la cuve sélectionnée. Un inconvénient majeur du système divulgué et qu'il ne permet d'intégrer que des cuves cryogéniques de mêmes tailles (voire de même marque commerciale), car la position des bouchons d'ouverture des cuves doit être strictement identique pour toutes les cuves. La manipulation des échantillons est effectuée par des pinces à vide placées en ligne de manière à collecter simultanément plusieurs échantillons. La manipulation des racks est réalisée à l'aide d'un électro-aimant, ce qui impose que les racks inox soient magnétiques ou qu'un élément ferreux soit implanté sur le haut du rack. Cela est donc une contrainte de conception. Enfin, à la lecture du brevet, il n'est pas réellement possible de savoir comment le transfert des boites hors des racks (ou dans les racks) s'effectue vers la station de transfert

Certaines demandes de brevet divulguent des bio-banques à pluralité de robots.

EP2169405 divulgue une bio-banque à plusieurs robots dont un monté sur un axe de translation, qui sont dédiés au transfert d'échantillons placés sur des microplaques. Un premier robot à bras articulé extrait une microplaque d'un réfrigérateur d'une chambre de congélation pour la déplacer une microplaque dans une unité de congélation. Le robot est en outre capable de transférer la microplaque vers un poste de traitement. Dans une station de manipulation est agencé un deuxième robot à bras articulé pour manipuler à l'unité des microplaques préalablement déposées par le premier robot. Ici encore, aucune possibilité d'extraction des échantillons à l'unité ni d'utiliser des cryo-conservateurs du commerce.

US2012/283867 décrit un système permettant d'automatiser l'extraction de plaques qui jouent le rôle de support d'échantillons logés dans un carrousel motorisé. Plusieurs robots de type « Pick and place » sont également intégrés dans le système afin de récupérer et de transférer les échantillons logés dans les plaques. Le système décrit ne permet pas d'utiliser des cryo-conservateurs du commerce.

CN106628783 décrit un système comprenant un robot cartésien embarquant deux robots à 6 axes qui se déplace chacun au-dessus d'une de deux rangées de cryo-conservateurs (cuves), le tout étant agencé dans une salle régulée en température, jusqu'à -40°C.Chaque robot à 6 axes est équipé d'un préhenseur dédié. Un des robots 6 axes est dédié à la préhension des bouchons de cuve, à la manipulation d'un récipient de type Dewar, destiné à faire la navette. Le récipient navette est placé à proximité de la cuve sélectionnée dans laquelle, l'opérateur souhaite récupérer des échantillons. L'autre des robots à 6 axes est dédié à la préhension de tours contenant des échantillons via un système d'aspiration complexe. Les plateaux qui assurent le maintien des tours d'échantillons) sont désignés comme étant des structures en nids-d'abeilles.

US 2019/0293344 A1 divulgue une installation de manipulation et de stockage cryogénique d'échantillons biologiques comprenant : une pluralité de colonnes de rangement pour recevoir par translation et loger une pluralité des boites de rangement contenant des échantillons biologiques ; une pluralité de récipients de stockage cryogéniques, chaque récipient comprenant dans sa partie supérieure une grille alvéolée dont chaque alvéole est adaptée pour recevoir à la verticale une de la pluralité des colonnes de rangement ; un premier organe de préhension, adapté pour saisir à l'unité une colonne de rangement ; un deuxième organe de préhension, adapté pour saisir à l'unité une boite de rangement ; un premier robot cartésien, agencé au-dessus de la rangée de récipients de stockage et étant adapté pour porter et déplacer, selon la verticale, le premier organe de préhension ; l'installation étant configurée de sorte que : i) le premier robot cartésien puisse déplacer le premier organe de préhension à proximité de l'un quelconque des récipients de stockage, ii) le premier organe de préhension vienne extraire verticalement n'importe laquelle des colonnes depuis une des alvéoles de la grille du récipient de stockage, iii) le premier robot cartésien étant adapté pour être aligné avec une porte d'accès pour permettre à l'opérateur d'insérer ou prélever des échantillons, et vice versa.

Si l'automatisation amène des avantages conséquents comme la garantie de traçabilité des échantillons sur base de données, la sécurité des opérateurs et des opérations de manipulation, les bio-banques automatisées déjà proposées présentent des inconvénients majeurs.

Tout d'abord, elles nécessitent un investissement très important à l'achat comme en fonctionnement et en maintenance, du fait d'une conception sur mesure pour chaque configuration, avec notamment l'impossibilité de réutiliser les équipements standard déjà existants, comme les récipients de stockage standard.

Ensuite, leur conception fait que leur gamme de température est restreinte, avec pour bon nombre l'impossibilité d'atteindre des températures cryogéniques, typiquement inférieures à -150°C.

Enfin, comme évoqué, leur conception sur mesure fait qu'elles sont dédiées à une seule et unique configuration, ce qui ne permet pas de les faire évoluer.

Ainsi, il existe donc un besoin d'améliorer les installations de manipulation et de stockage d'échantillons biologiques, ou bio-banques et ce notamment en s'affranchissant des inconvénients à la fois des bio-banques conventionnelles dans lesquelles la manipulation des échantillons est assurée manuellement et des bio-banques automatisées déjà proposées.

De manière générale, il existe un besoin d'une bio-banque qui soit entièrement automatisée pour la gestion et la protection d'un nombre d'échantillons élevé, conservés dans des récipients de stockage du commerce (cryo-conservateurs), à un coût inférieur aux installations connues, avec une traçabilité complète des échantillons, qui laisse la possibilité à tout moment de gérer les échantillons en mode manuel, afin de faciliter les maintenances, et conserver une certaine flexibilité et qui puisse être évolutive notamment en cas d'augmentation d'échantillons à conserver.

De manière générale également, il existe un besoin d'une bio-banque qui rende plus simple et plus rapide le stockage/déstockage d'échantillons biologiques.

Le but de l'invention est de répondre au moins en partie à ce(s) besoin(s).

### Exposé de l'invention

Pour ce faire, l'invention concerne, sous l'un de ses aspects, une installation de manipulation et de stockage d'échantillons biologiques à très basses températures, notamment dans des conditions cryogéniques comprenant :
- une pluralité de colonnes de rangement, chacune s'étendant selon un axe longitudinal et présentant une structure adaptée pour recevoir par translation et loger une pluralité de conteneurs adaptés chacun pour contenir un ou des échantillons biologiques, d'origine humaine, animale, végétale ou environnementale;
- une pluralité de récipients de stockage, à isolation thermique, alignés selon au moins une rangée, l'intérieur de chaque récipient étant apte à être soumis à de très basses températures, chaque récipient comprenant dans sa partie supérieure une grille alvéolée dont chaque alvéole est adaptée pour recevoir à la verticale une de la pluralité des colonnes de rangement;
- un premier organe de préhension, adapté pour saisir à l'unité une colonne de rangement;
- un robot à bras articulé à au moins cinq degrés de liberté, dit robot à au moins cinq axes, le bras du robot étant adapté pour se déplacer dans n'importe quelle position au sein d'une zone circulaire de déplacement, l'extrémité du bras du robot étant munie d'un deuxième organe de préhension, adapté pour saisir à l'unité un conteneur ou une boite de rangement à compartiments multiples, chaque compartiment étant adapté pour loger un conteneur ;
- un premier robot cartésien, agencé au-dessus de la (des) rangée(s) de récipients de stockage, le premier robot cartésien étant à au moins deux axes dont un axe de déplacement longitudinal est parallèle à la direction d'alignement de la (des) rangée(s) et un axe de déplacement vertical; le premier robot cartésien étant adapté pour porter et déplacer, selon son axe de déplacement longitudinal, le robot à au moins cinq axes, et pour porter et déplacer selon la verticale, le premier organe de préhension.

L'installation est configurée de sorte que :
i/ le premier robot cartésien puisse déplacer le robot à au moins cinq axes à proximité de l'un quelconque des récipients de stockage,
ii/ le premier organe de préhension vienne extraire verticalement au moins partiellement n'importe laquelle des colonnes depuis une des alvéoles de la grille du récipient de stockage dans une position dite de prélèvement,
iii/ le deuxième organe de préhension vienne extraire au moins un conteneur sélectionné dans la position de prélèvement de la colonne,
et vice-versa.

Par « vice-versa », on entend ici et dans le cadre de l'invention que les opérations de l'installation et notamment les opérations i/ à iii/ peuvent être réalisés dans le sens inverse, en vue d'un stockage d'un conteneur d'échantillons dans l'un quelconque des récipients de stockage de l'installation.

Le bras à bras articulé peut être à cinq, six ou sept degrés de liberté, respectivement dit robot cinq, six ou sept axes.

Ainsi, l'invention consiste essentiellement en une bio-banque qui met en oeuvre conjointement un robot cinq ou six axes ou sept axes porté par un robot cartésien qui déplace par translation le robot cinq ou six axes le long d'au moins une rangée de récipients de stockage, avantageusement cryogéniques (cryo-conservateurs) intégrant chacun des colonnes de rangement ou racks à structure en nid d'abeilles dont les alvéoles permettent de loger à l'unité des conteneurs d'échantillons.

La mise en oeuvre d'un robot cartésien embarquant un bras de robot 5, 6 ou 7 axes donne la flexibilité suffisante à l'installation pour pouvoir utiliser des cryo-conservateurs actuels du commerce qu'il soient à ouverture totale ou à ouverture partielle.

Cette mise en oeuvre combinée d'un robot cartésien et d'un robot 5, 6 ou 7 axes permet d'obtenir une installation automatisée simple et fiable (peu de composants mécaniques ou électriques).

La partie robotisée de l'installation assure la traçabilité et la préservation (conservation de la chaîne du froid) des échantillons.

Le premier robot cartésien permet d'effectuer les opérations principales de positionnement suivantes :
- déplacement du premier organe de préhension au niveau du récipient de stockage sélectionné ;
- déplacement du premier organe de préhension au niveau de la colonne de rangement sélectionnée dans le récipient sélectionné ;
- déplacement du bras robotisé (robot 5, 6 ou 7 axes) vers une zone à sas de chargement/déchargement (zone d'accostage) des conteneurs d'échantillons.

Le premier robot cartésien permet également de réaliser les opérations principales suivantes, à l'aide du premier organe de préhension:
- extraction, mise en place, dépose et récupération des couvercles des récipients de stockage qui sont à ouverture partielle, dans le cas où l'ouverture des couvercles des récipients de stockage n'est pas automatisée à l'aide de vérins,
- extraction et mise en place des racks hors des récipients de stockage par translation verticale.

L'extraction d'un rack sélectionné peut ne pas être complète, c'est-à-dire une partie reste à l'intérieur du récipient de stockage lors de l'extraction d'un conteneur d'échantillons sélectionné. Autrement dit, en fonction de la position de l'échantillon sélectionné dans le rack, celui-ci sera sorti suffisamment du récipient de stockage pour permettre au bras robotisé d'accéder à l'échantillon souhaité. - de préférence, bridage du rack extrait du récipient par l'intermédiaire du dispositif de bridage comme décrit ci-après.

Le bras du robot 5, 6 ou 7 axes permet de réaliser les opérations principales suivantes, à l'aide du deuxième organe de préhension:
- extraction des conteneurs d'échantillons hors des racks et mise en place dans les boites placées dans le bac de transfert embarqué, porté par l'axe de déplacement longitudinal du premier robot cartésien. Le robot 5,6 ou 7 axes peut avantageusement être guidé par vision (caméra embarquée sur le robot) ou par laser notamment lors de la phase de récupération ou de mise en place des conteneurs d'échantillons dans les racks.
- extraction des conteneurs d'échantillons hors des boites de rangement placées dans le bac de transfert embarqué et mise en place dans les racks ;
- de préférence, positionnement du conteneur d'échantillon vers un lecteur de données afin d'en vérifier l'identification.

Les organes de préhension sont de préférence chacun munis d'un organe de compliance selon les trois axes X, Y et Z avec ressorts de rappels pour permettre un recentrage automatique.

Avantageusement, le deuxième organe de préhension qui est porté en extrémité du bras de robot 5, 6 ou 7 axes peut être équipé d'un système anticollision et/ou d'un système de positionnement /d'apprentissage par laser et/ou d'une caméra et son système d'éclairage par LED qui pilote le robot en lui indiquant la position cible.

Avantageusement, les récipients de stockage sont alignés selon deux rangées parallèles délimitant un espace dans lequel l'(les) axe(s) de déplacement longitudinal du premier robot cartésien est(sont) agencé(s).

Selon un premier mode de réalisation avantageux, la structure de chaque colonne de rangement est une structure en nid d'abeille dont les alvéoles s'étendent selon un axe sécant avec l'axe longitudinal, chaque alvéole d'une colonne de rangement étant adapté pour recevoir et loger à l'unité un de la pluralité de conteneurs;
le deuxième organe de préhension est adapté pour saisir à l'unité un conteneur.

L'installation est configurée de sorte que iii/ le deuxième organe de préhension vienne extraire à l'unité n'importe lequel des conteneurs sélectionnés dans la position de prélèvement de la colonne.

Selon ce premier mode, les conteneurs sont donc rangés et extraits à l'unité dans une alvéole de la structure en nid d'abeilles d'une colonne de rangement que l'on désigne usuellement par le terme « rack ». Les alvéoles peuvent être de section ronde, hexagonale ou carrée ou triangulaire ou de toute forme polynomiale. Les dimensions des alvéoles sont adaptées à la géométrie des conteneurs échantillons qui sont manipulés, et ce en prenant en compte la contraction différentielle des échantillons et des alvéoles des racks. Les alvéoles peuvent être selon un axe horizontal ou incliné par rapport à la verticale de sorte à les ranger inclinés ce qui facilite la tenue des conteneurs d'échantillons dans le rack. Avec une telle structure en nid d'abeilles à alvéoles de rangement unitaires, seuls les conteneurs d'échantillons sont stockés. Dans ce mode, il n'y a pas à prévoir de boîtes de rangement dans lesquelles sont placées les échantillons, ce qui simplifie l'automatisation.

Selon ce premier mode, on peut prévoir avantageusement un dispositif de bridage, porté par l'axe de déplacement vertical du robot cartésien, le dispositif de bridage étant adapté pour maintenir par bridage une colonne de rangement lorsqu'elle est extraite au moins partiellement d'un récipient de stockage. Le dispositif de bridage est de préférence constitué d'un vérin linéaire principal sur lequel est fixé un préhenseur, de type pneumatique, muni de deux mors. Le vérin principal permet de placer le préhenseur à proximité de la colonne de rangement (rack) ou de s'éloigner de celle-ci lorsqu'on souhaite la déplacer verticalement. Dans la position dite de proximité, et que le rack se trouve dans la position souhaitée verticalement, le préhenseur à deux mors est activé et bride ainsi le rack.

On peut prévoir en outre un dispositif d'extraction, porté par l'axe de déplacement vertical du robot cartésien, le dispositif d'extraction étant adapté pour pousser n'importe quel conteneur d'une alvéole d'une colonne de rangement lorsqu'elle est extraite au moins partiellement d'un récipient de stockage.

De préférence, le dispositif d'extraction comprend un ou plusieurs vérins en tant que moyen(s) de poussée, qui permet(tent) de pousser les conteneurs d'échantillons logés dans les alvéoles afin d'en faciliter leur extraction. Les vérins peuvent être, de façon non exclusive, de type pneumatique, hydraulique ou électrique.

Selon un deuxième mode de réalisation avantageux :
la structure de chaque colonne de rangement est divisée en une pluralité de tiroirs de rangement, adaptés chacun pour recevoir par translation une pluralité des boites de rangement à compartiments multiples, chaque compartiment étant adapté pour loger un conteneur adapté chacun pour contenir un ou des échantillons biologiques ;
le deuxième organe de préhension est adapté pour saisir à l'unité une boîte de rangement; l'installation est configurée de sorte que iii/ le deuxième organe de préhension vienne extraire à l'unité n'importe laquelle des boites de rangement sélectionnée dans la position de prélèvement de la colonne.

Selon une variante de réalisation avantageuse, le premier robot cartésien est à trois axes, le troisième axe étant un axe de déplacement latéral adapté pour déplacer latéralement le premier organe de préhension au moins à l'aplomb de n'importe quelle alvéole de la grille de n'importe lequel des récipients de stockage.

L'utilisation d'un troisième axe de déplacement horizontal, orthogonal à l'axe de déplacement longitudinal, permet de positionner le premier organe de préhension au niveau des différentes positions des colonnes et de couvrir ainsi tous les emplacements de toutes les alvéoles de la grille.

Selon un mode de réalisation avantageux, l'installation comprend:
- au moins un bac de transfert, porté par l'axe de déplacement longitudinal du premier robot cartésien et agencé dans la zone circulaire de déplacement du robot cinq ou six axes, le bac de transfert étant adapté pour loger une pluralité de boites de rangement.
- un poste de préparation depuis lequel un opérateur peut amener un ou plusieurs conteneurs ou une ou plusieurs boite(s) à compartiments multiples,
l'installation étant configurée de sorte que l'axe de déplacement longitudinal du premier robot cartésien puisse déplacer le bac de transfert dans le poste de préparation.

Selon une variante de réalisation avantageuse, le poste préparation comprend un deuxième robot cartésien à au moins deux axes, adapté pour amener les conteneurs ou les boites dans un sas de récupération des échantillons biologiques par un opérateur. Le robot cartésien du poste de préparation permet d'effectuer les opérations principales de préparation suivantes :
- déplacement des boites de transfert placées manuellement par l'opérateur sur un tiroir de chargement vers un bac de transfert statique (mise en froid des boites et des conteneurs échantillons positionnés) ;
- déplacement des boites de transfert entre le bac de transfert statique et le bac de transfert embarqué, porté par le premier robot cartésien.

Ainsi, le transfert de boites d'échantillons se fait directement entre le robot cartésien du poste de préparation et l'opérateur par un tiroir de chargement, ce qui permet de s'affranchir de la mise en oeuvre d'un convoyeur mobile.

Selon une variante de réalisation avantageuse, on prévoit des moyens d'instrumentation de mesure embarqués sur chaque structure de colonne de rangement.

De préférence, les moyens d'instrumentation comprennent au moins une sonde de température et/ou au moins une jauge de déformation et/ou un moyen d'identification par radiofréquence (RFID) et/ou un transpondeur, de préférence de type MEMS (acronyme anglais pour « MicroElectroMechanical System »).

De préférence encore, on peut agencer au moins deux sondes de température par colonne de rangement, dont une agencée à une extrémité longitudinale et l'autre agencée à l'extrémité longitudinale opposée.

La mesure de température peut être réalisée sans fil. La mesure de température de la face supérieure de la colonne de rangement (rack) est de préférence réalisée lorsque le premier organe de préhension, embarqué sur l'axe vertical du premier robot cartésien est en contact avec le rack souhaité. Le relevé de température permet alors d'autoriser ou non la sortie du rack en fonction de la température relevée sur ce dernier. Le relevé de température d'une seconde sonde de température agencée sur la face inférieure du rack, voire de préférence d'une troisième sonde de température agencée au milieu du rack (face latérale) permet d'avoir une cartographie thermique des racks notamment lorsque ceux-ci sont placés en dehors des récipients de stockage. Les relevés de température permettront de préserver l'intégrité des échantillons en imposant que le rack soit placé à l'intérieur de récipient de stockage, lorsque sa température, notamment celle mesurée sur la face supérieure),se rapproche de la température maximale admissible. D'autre part, les relevés de températures permettront de connaitre les gradients de températures et les contractions thermiques subies par le rack et cela de manière dynamique car l'acquisition des relevés de température se fera tant que le premier organe de préhension est en contact avec le rack. Cette information permet avantageusement de guider le robot en intégrant des coefficients de compensation liés à la contraction thermique, notamment lors de la phase d'extraction ou de mise en place des échantillons dans les racks.

Avantageusement, l'installation comprend un bâti au sol ou au plafond qui porte le premier robot cartésien ou un portique qui porte le premier robot cartésien en suspension au-dessus de la(des) rangée(s) de récipients de stockage.

Avantageusement, les servitudes, comme les fluides (arrivées d'azote liquide, air, eau...), les alimentations pneumatiques, électriques voire hydrauliques, qui peuvent déjà être en place dans les locaux des entités gestionnaires d'installations de type biobanques peuvent être placées sous le bâti de l'installation selon l'invention.

Le choix d'un bâti au sol ou d'un portique dépend de l'environnement autour de l'installation. Le bâti ou portique peut être un assemblage mécano-soudé ou réalisé en profilés, typiquement en aluminium ou acier placé entre les rangés de récipients de stockage. Selon une variante de réalisation avantageuse, l'installation comprend une enceinte à environnement contrôlé (ambiance gazeuse et/ou hygrométrie et/ou température contrôlée) comprenant un accès sécurisé, notamment au poste de préparation pour un opérateur depuis l'extérieur, l'enceinte étant configurée pour loger la pluralité des conteneurs et boites de rangement, la pluralité des colonnes de rangement, les récipients de stockage, le robot à au moins cinq axes (cinq ou six ou sept axes), les organes de préhension, le(s) robot(s) cartésien(s) et le cas échéant le bâti ou le portique. Cette enceinte permet de maintenir une ambiance inertée par exemple à l'azote), de maintenir un faible taux d'hygrométrie et de réguler la température à l'intérieur de l'enceinte.

Avantageusement, le ou les récipients de stockage comprend(nent) (chacun) un couvercle pour fermer le(s) récipient(s) qui est (sont) en configuration de stockage, c'est-à-dire non concerné(s) par l'extraction ou réciproquement l'insertion d'une colonne en son(leur) sein.

Avantageusement encore, l'unité de contrôle-commande du premier robot cartésien est adaptée pour commander l'ouverture et réciproquement la fermeture de chaque récipient de stockage.

Les conteneurs sont de préférence des tubes de conservation (cryotubes, cryovials ou tubes de stockage d'échantillons).

De préférence, le ou les récipients de stockage fonctionnent à des conditions cryogéniques, notamment par azote liquide en tant que source de froid. Comme déjà évoqué, les récipients peuvent être des cryo-conservateurs déjà existants, de différentes marques commerciales. Dans une même installation selon l'invention, on peut avoir des récipients de stockage de tailles différentes, à ouverture totale ou partielle (col à ouverture large ou col étroit). Les cryo-conservateurs sont équipés d'une grille alvéolée afin de positionner les colonnes de rangement (racks). Les cryo-conservateurs à ouverture totale sont équipés d'un vérin pneumatique permettant d'automatiser leur ouverture et leur fermeture. Les bouchons des cryo-conservateurs à ouverture partielle sont quant à eux modifiés pour permettre d'automatiser leur ouverture.

On peut prévoir avantageusement des récipients de stockage avec un système de ventilation afin de réduire tout gradient thermique. Par exemple, des ventilateurs peuvent être placés sur les portions libres de la grille alvéolée dédiée au maintien des racks.

Les avantages d'une installation selon l'invention sont nombreux parmi lesquels on peut citer :
- réutilisation des moyens de stockage existants (cryo-conservateurs) avec la possibilité de s'adapter à différentes tailles de cryo-conservateurs, différents types de cryo-conservateurs du commerce, à ouverture totale ou partielle ;
- flexibilité et modularité :
   - possibilité de s'adapter au nombre de cryo-conservateurs utilisés (système plus ou moins long) ;
   - possibilité de s'adapter aux tailles des cryo-conservateurs utilisés (système plus ou moins large et plus ou moins haut) ;
   - possibilité de s'adapter à l'environnement de la salle d'implantation (adaptable en fonction de la hauteur du plafond, de l'emplacement des lignes froides pour alimenter les cryo-conservateurs ou de l'espacement entre les récipients.
- faible quantité de travaux nécessaires pour robotiser une Biobanque existante, avec la possibilité d'implanter les lignes froides alimentant les cryo-conservateurs dessus le portique suspendu ou dessous le bâti au sol du robot cartésien de déplacement ;
- simplicité de fonctionnement :
   - l'opérateur charge une (ou plusieurs) boites de rangement (« cryo-boxes ») conventionnelle(s) dans laquelle sont placés des conteneurs, de préférence des tubes (« vials ») contenant les échantillons biologiques à stocker dans les récipients cryogéniques ;
   - les racks contiennent uniquement les conteneurs d'échantillons biologiques placés dans les alvéoles d'une structure en nid d'abeilles ;
- meilleure conservation de la chaîne du froid (atmosphère froide), de lutte contre le givre (atmosphère sèche) et préservation des échantillons que selon l'état de l'art, grâce notamment à l'instrumentation des racks avec des sondes de température intégrées qui permet une maîtrise de la température des racks et donc de celles des échantillons avec un replacement immédiat des racks en ambiance froide dans les cryo-conservateurs lorsque la température d'un rack extrait s'approche de la température maximale admissible
- évolutivité de l'installation, en adaptant à souhait le nombre de cryo-conservateurs, les dimensions et les courses de déplacement du premier robot cartésien. Par exemple, la course de déplacement longitudinal du robot cartésien peut être rallongée si le nombre de cryo-conservateurs augmente. Par exemple encore, la hauteur du robot cartésien peut être adaptée en fonction de la hauteur du plafond en utilisant un axe de déplacement en Z télescopique.
- possibilité à tout moment de gérer l'installation en mode manuel, pour faciliter les maintenances, et conserver une certaine flexibilité.

L'invention a également pour objet l'utilisation de l'installation telle que décrite précédemment, pour stocker des échantillons biologiques dans des conditions cryogéniques sous enceinte à environnement contrôlé.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] est une vue en perspective d'un exemple d'installation de manipulation et de stockage cryogénique d'échantillons biologiques selon l'invention.
[Fig 1A] est une vue de détail en perspective de la figure 1, montrant les composants de l'installation en train d'extraire une colonne de rangement (rack) d'un récipient de stockage cryogénique (cryo-conservateur).
[Fig 1B] est une vue agrandie de la figure 1A.
[Fig 2] est une autre vue en perspective d'un exemple d'installation de manipulation et de stockage cryogénique d'échantillons biologiques selon l'invention.
[Fig 2A] est une vue de détail en perspective de la figure 2 montrant le poste de préparation de l'installation.
[Fig 3] est une vue en perspective d'un rack conforme à l'invention.
[Fig 3A] est une vue de détail de la structure en nid d'abeilles d'un rack selon la figure 3.
[Fig 4] est une autre vue en perspective d'un rack conforme à l'invention.
[Fig 5] est une vue en coupe longitudinale montrant le détail d'une structure d'un rack conforme à l'invention tel que saisi par le premier organe de préhension de l'installation.
[Fig 6] est une vue en perspective d'un dispositif de bridage et d'extraction destiné à respectivement brider un rack et à extraire les tubes d'échantillons logés en son sein.
[Fig 6A] est une vue en perspective de détail du dispositif de bridage et d'extraction selon la figure 6.
[Fig 7A] est une vue de côté montrant le dispositif de bridage selon les figures 6 et 6A, dans une position en retrait d'un rack saisi par le premier organe de préhension.
[Fig 7B] est une vue de côté montrant le dispositif de bridage selon les figures 6 et 6A, dans une position de bridage d'un rack saisi par le premier organe de préhension.
[Fig 8A] est une vue en perspective montrant le dispositif de bridage selon les figures 6 et 6A, dans la position ouverte de ses mors de bridage d'un rack saisi par le premier organe de préhension.
[Fig 8B] est une vue en perspective montrant le dispositif de bridage selon les figures 6 et 6A, dans la position fermée de ses mors de bridage d'un rack saisi par le premier organe de préhension.
[Fig 9] est une vue en perspective montrant l'extraction par poussée d'un doigt du dispositif d'extraction, d'un tube d'échantillon depuis son logement au sein d'un rack.
[Fig 9A] est une vue en coupe longitudinale reprenant la figure 9.
[Fig 10] est une vue en perspective du premier organe de préhension de l'installation selon l'invention.
[Fig 11] est une vue en perspective partielle montrant une extraction d'un rack par le premier organe de préhension.
[Fig 12] est une vue en perspective montrant une extraction d'un rack par le premier organe de préhension avec la mise en oeuvre de la compliance de dernier.
[Fig 13] est une vue en perspective montrant la mise en oeuvre du relevé de température par pointes à touches supportées par un boitier-support fixé sur le premier organe de préhension et qui sont destinées à venir en contact avec une carte électronique fixée en face supérieure d'un rack.
[Fig 14] est une vue en perspective du deuxième organe de préhension de l'installation selon l'invention, en fonctionnement de préhension d'un conteneur d'échantillon (tube) à l'unité.
[Fig 15] est une vue en perspective du deuxième organe de préhension de l'installation selon l'invention, avec tous ses composants pour le prélèvement à l'unité des tubes d'échantillons.
[Fig 16] est une vue en perspective illustrant une variante du deuxième organe de préhension de l'installation selon l'invention, avec tous ses composants pour le prélèvement à l'unité de boites contenant une pluralité de conteneurs d'échantillon (tubes).
[Fig 17] est une vue en perspective d'une partie d'une installation selon l'invention illustrant une étape de dépôt d'un ou plusieurs échantillons à conserver dans un récipient de stockage cryogénique.
[Fig 18] est une vue en perspective d'une partie d'une installation selon l'invention illustrant une étape de dépôt d'un ou plusieurs échantillons à conserver dans un récipient de stockage cryogénique.
[Fig 19] est une vue en perspective d'une partie d'une installation selon l'invention illustrant une étape de dépôt d'un ou plusieurs échantillons à conserver dans un récipient de stockage cryogénique.
[Fig 20] est une vue en perspective d'une partie d'une installation selon l'invention illustrant une étape de dépôt d'un ou plusieurs échantillons à conserver dans un récipient de stockage cryogénique.
[Fig 21] est une vue en perspective d'une partie d'une installation selon l'invention illustrant une étape de dépôt d'un ou plusieurs échantillons à conserver dans un récipient de stockage cryogénique.
[Fig 22] est une vue en perspective d'une partie d'une installation selon l'invention illustrant une étape de dépôt d'un ou plusieurs échantillons à conserver dans un récipient de stockage cryogénique.
[Fig 23] est une vue en perspective d'une partie d'une installation selon l'invention illustrant une étape de dépôt d'un ou plusieurs échantillons à conserver dans un récipient de stockage cryogénique.
[Fig 24] est une vue en perspective d'une partie d'une installation selon l'invention illustrant une étape de dépôt d'un ou plusieurs échantillons à conserver dans un récipient de stockage cryogénique.
[Fig 25] est une vue en perspective d'une partie d'une installation selon l'invention illustrant une étape de dépôt d'un ou plusieurs échantillons à conserver dans un récipient de stockage cryogénique.
[Fig 26] est une vue en perspective d'une partie d'une installation selon l'invention illustrant une étape de dépôt d'un ou plusieurs échantillons à conserver dans un récipient de stockage cryogénique.
[Fig 27] est une vue en perspective d'une partie d'une installation selon l'invention illustrant une étape de dépôt d'un ou plusieurs échantillons à conserver dans un récipient de stockage cryogénique.
[Fig 28] est une vue en perspective d'une partie d'une installation selon l'invention illustrant une étape de dépôt d'un ou plusieurs échantillons à conserver dans un récipient de stockage cryogénique.
[Fig 29] est une vue en perspective d'une partie d'une installation selon l'invention illustrant une étape de dépôt d'un ou plusieurs échantillons à conserver dans un récipient de stockage cryogénique.
[Fig 30] est une vue en perspective d'une partie d'une installation selon l'invention illustrant une étape de dépôt d'un ou plusieurs échantillons à conserver dans un récipient de stockage cryogénique.
[Fig 31] est une vue en perspective d'une partie d'une installation selon l'invention illustrant une étape de dépôt d'un ou plusieurs échantillons à conserver dans un récipient de stockage cryogénique.
[Fig 32] est une vue en perspective d'une partie d'une installation selon l'invention illustrant une étape de dépôt d'un ou plusieurs échantillons à conserver dans un récipient de stockage cryogénique.
[Fig 33] est une vue en perspective d'une partie d'une installation selon l'invention illustrant une étape de dépôt d'un ou plusieurs échantillons à conserver dans un récipient de stockage cryogénique.
[Fig 34] est une vue en perspective d'une partie d'une installation selon l'invention illustrant une étape de dépôt d'un ou plusieurs échantillons à conserver dans un récipient de stockage cryogénique.
[Fig 35] est une vue en perspective d'une partie d'une installation selon l'invention illustrant une étape de dépôt d'un ou plusieurs échantillons à conserver dans un récipient de stockage cryogénique.
[Fig 36] est une vue en perspective d'une partie d'une installation selon l'invention illustrant une étape de dépôt d'un ou plusieurs échantillons à conserver dans un récipient de stockage cryogénique.
[Fig 37] est une vue en perspective d'une partie d'une installation selon l'invention illustrant une étape de dépôt d'un ou plusieurs échantillons à conserver dans un récipient de stockage cryogénique.
[Fig 38] est une vue en perspective d'une partie d'une installation selon l'invention illustrant une étape de dépôt d'un ou plusieurs échantillons à conserver dans un récipient de stockage cryogénique.
[Fig 39] est une vue en perspective d'une partie d'une installation selon l'invention illustrant une étape de dépôt d'un ou plusieurs échantillons à conserver dans un récipient de stockage cryogénique.
[Fig 40] est une vue en perspective d'une partie d'une installation selon l'invention illustrant une étape de dépôt d'un ou plusieurs échantillons à conserver dans un récipient de stockage cryogénique.
[Fig 41] est une vue en perspective d'une partie d'une installation selon l'invention illustrant une étape de dépôt d'un ou plusieurs échantillons à conserver dans un récipient de stockage cryogénique.
[Fig 42] est une vue en perspective d'une partie d'une installation selon l'invention illustrant une étape de dépôt d'un ou plusieurs échantillons à conserver dans un récipient de stockage cryogénique.
[Fig 43] est une vue en perspective d'une partie d'une installation selon l'invention illustrant une étape de dépôt d'un ou plusieurs échantillons à conserver dans un récipient de stockage cryogénique.
[Fig 44] est une vue en perspective d'une partie d'une installation selon l'invention illustrant une étape de dépôt d'un ou plusieurs échantillons à conserver dans un récipient de stockage cryogénique.
[Fig 45] est une vue en perspective d'une partie d'une installation selon l'invention illustrant une étape de dépôt d'un ou plusieurs échantillons à conserver dans un récipient de stockage cryogénique.
[Fig 46] est une vue en perspective d'une partie d'une installation selon l'invention illustrant une étape de dépôt d'un ou plusieurs échantillons à conserver dans un récipient de stockage cryogénique.
[Fig 47] est une vue en perspective d'une partie d'une installation selon l'invention illustrant une étape de dépôt d'un ou plusieurs échantillons à conserver dans un récipient de stockage cryogénique.
[Fig 48] est une vue en perspective d'une partie d'une installation selon l'invention illustrant une étape de dépôt d'un ou plusieurs échantillons à conserver dans un récipient de stockage cryogénique.
[Fig 49] est une vue en perspective d'une partie d'une installation selon l'invention illustrant une variante des étapes réalisées dans le poste de préparation de l'installation.
[Fig 50] est une vue en perspective d'une partie d'une installation selon l'invention illustrant une variante des étapes réalisées dans le poste de préparation de l'installation.
[Fig 51] est une vue en perspective d'une partie d'une installation selon l'invention illustrant une variante des étapes réalisées dans le poste de préparation de l'installation.
[Fig 52] est une vue en perspective d'un bouchon modifié d'une cuve (cryo-conservateur) à ouverture partielle de l'installation selon l'invention.
[Fig 53] est une vue en perspective montrant l'ouverture du bouchon modifié selon la figure 52 d'une cuve (cryo-conservateur) à ouverture partielle au moyen du robot cartésien de l'installation selon l'invention.

### Description détaillée

On précise ici dans l'ensemble de la présente demande, les termes « inférieure », « centrale», « supérieure », « dessus », « dessous », « intérieure », « extérieure», sont à comprendre par référence à un récipient de stockage et une colonne de rangement de l'installation selon l'invention agencés à la verticale.

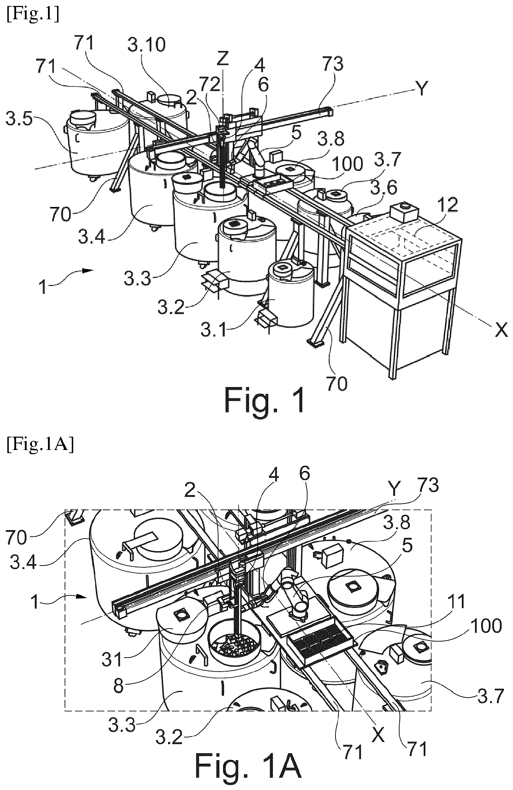

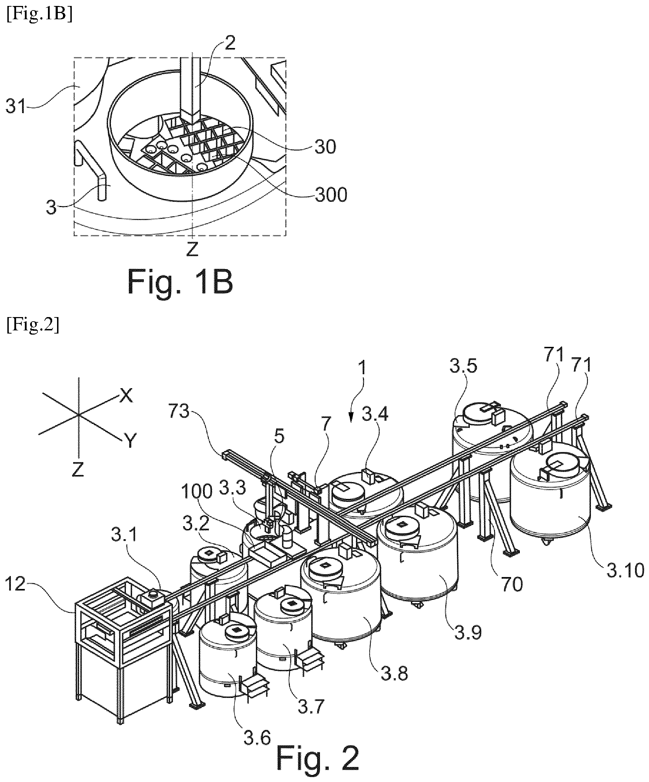

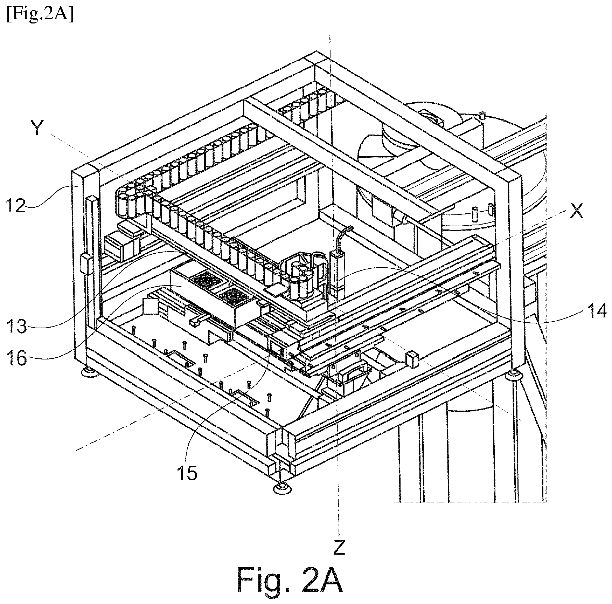

On a représenté en figures 1, 1A, 2 et 2A, l'ensemble des composants essentiels d'une installation 1 de manipulation et de stockage d'échantillons biologiques à très basses températures, notamment dans des conditions cryogéniques, selon l'invention.

Les échantillons biologiques sont contenus dans des conteneurs. Les échantillons biologiques peuvent être d'origine humaine, animale, végétale ou environnementale.

Dans l'exemple illustré, les conteneurs d'échantillons 10 mis en oeuvre sont des tubes de conservation déjà utilisés dans le commerce (cryotubes, cryovials ou tubes de stockage d'échantillon).

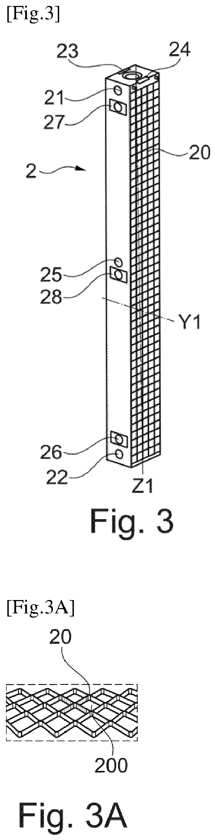

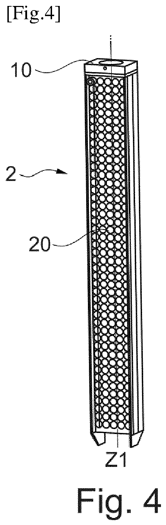

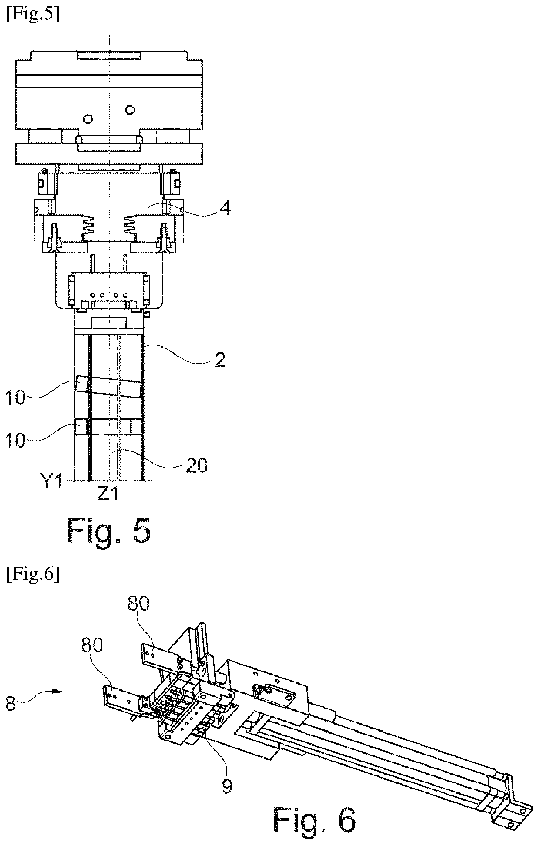

L'installation 1 comprend des colonnes de rangement 2 ou racks. Comme montré en figures 3, 3A, 4 et 5, une colonne de rangement 2, s'étend selon un axe longitudinal Z1 et a une structure en nid d'abeilles 20. Chaque alvéole 200 peut recevoir par translation transversale à l'axe longitudinal Z1, un conteneur d'échantillon (tube) 10. Les alvéoles 200 peuvent être de section ronde, hexagonale ou carrée, triangulaire ou de toute forme polynomiale. Les dimensions des alvéoles sont adaptées à la géométrie des conteneurs d'échantillon (tubes) 10 qui sont manipulés ainsi qu'aux contractions thermiques. L'axe Y1 des alvéoles peuvent être un axe horizontal ou incliné par rapport à la verticale de sorte à les ranger inclinés ce qui facilite la tenue des tubes d'échantillons 10 dans le rack 2 (figure 5).

L'installation 1 comprend au moins une rangée, deux dans l'exemple illustré, de récipients de stockage 3.1 à 3.10 déjà utilisés dans le commerce, appelés cryo-conservateurs. Ces cryo-conservateurs peuvent être des récipients de cryopréservation, les récipients de type Dewar, les cuves isolées sous vide ou les congélateurs cryogéniques. Ces récipients sont à isolation thermique, dont l'intérieur est apte à être soumis à de très basses températures, notamment par de l'azote liquide en tant que source de froid sont agencés. Chaque récipient 3.1 à 3.10 peut être de type à double-paroi dans laquelle le vide est réalisé pour garantir l'isolation thermique avec l'extérieur.

De préférence, les récipients 3.1 à 3.10 sont fixés au sol. Comme montré en figures 1 et 2, les récipients de stockage peuvent être de différentes tailles. Ils peuvent être à ouverture totale ou partielle, c'est-à-dire des cryo-conservateurs à col large ou à col étroit.

Comme mieux visible en figure 1B, chaque récipient 3 comprend dans sa partie supérieure une grille alvéolée 30 dont chaque alvéole 300 peut recevoir à la verticale une colonne de rangement 2. Chaque récipient 3 est fermé par un couvercle amovible 31.

L'installation 1 selon l'invention comporte une enceinte à environnement contrôlé (ambiance gazeuse, hygrométrie, température), non représentée, dans laquelle tous les composants essentiels sont logés.

L'installation 1 comprend un premier organe de préhension 4, adapté pour saisir à l'unité une colonne de rangement 2.

Un robot 5 multiaxes (de cinq à sept axes) est prévu pour la manipulation des conteneurs d'échantillon (tubes) 10 placés dans les racks, ainsi qu'au déplacement des conteneurs d'échantillon (tubes) ou des boites de rangement 11 les contenant de ou vers le poste d'interface 12 avec l'utilisateur. Dans l'exemple illustré, le robot multiaxes 5 est un robot 6 axes.

L'extrémité du bras du robot multiaxes est munie d'un deuxième organe de préhension 6, adapté pour saisir à l'unité un conteneur 10 ou une boite de rangement 11 à compartiments multiples, chaque compartiment étant adapté pour loger un conteneur 10. On peut configurer avantageusement l'installation de sorte à adapter l'organe de préhension 6 en fonction de l'élément à manipuler.

L'installation 1 comprend également un premier robot cartésien 7, agencé au-dessus des rangées de récipients de stockage 3.1 à 3.10, qui embarque sur une même platine le robot à six axes 5 ainsi qu'un bac de transfert 100, de préférence refroidi par azote liquide. Le bac de transfert 100 contient les fonds de boîtes de rangement 11 nécessaires pour placer ou prélever les échantillons. La capacité du bac de transfert, à savoir le nombre de boîtes 11, peut être adapté.

Un bâti au sol 70, réalisé par assemblage mécano-soudé ou de profilés, porte le premier robot cartésien 7 au-dessus de des rangées de récipients de stockage 3.1 à 3.10.

Le premier robot cartésien 7 à trois axes (X, Y, Z) de déplacement permet à la fois de déplacer le robot six axes 5 et le bac de transfert 100 de manière longitudinale le long des rangées des récipients de stockage 3.1 à 3.10, mais aussi de manière latérale afin d'accéder aux différents racks 2 et enfin de manière verticale pour porter et déplacer selon la verticale, le premier organe de préhension afin d'extraire ou replacer les racks dans les récipients 3.1 à 3.10. Ainsi, l'axe de déplacement longitudinal X du robot cartésien 7 est parallèle à la direction d'alignement de la (des) rangée(s) et l'axe de déplacement Z est vertical.

L'axe de déplacement horizontal peut être avantageusement constitué de deux rails de translation 71, 71 agencés dans l'espace entre les deux rangées de récipients de stockage 3.1 à 3.10. L'axe de déplacement vertical peut être avantageusement constitué de deux axes de translation 72 indépendants motorisés ou peut être de type télescopique, afin de réduire l'encombrement vertical, dans le cas où la hauteur du plafond in situ est limitée.

L'axe de déplacement latéral 73 permet de déplacer latéralement le premier organe de préhension 4 au moins à l'aplomb de n'importe quelle alvéole 300 de la grille 30 de n'importe lequel des récipients de stockage 3.

Tous les axes de déplacement peuvent être constitués d'axes de translation à vis à billes ou à courroies, qui peuvent le cas échéant être assistés par des moteurs de type sans broches (« brushless » en anglo-saxon) ou à courant continu DC. Les axes de déplacement peuvent également être constitués de moteur de type linéaire (« Direct-Drive Linear Stage » en anglo-saxon).

Conformément à l'invention, l'installation est configurée de sorte que :
i/ le premier robot cartésien 7 puisse déplacer le robot six axes 5 à proximité de l'un quelconque des récipients de stockage 3.1 à 3.10 ;
ii/ le premier organe de préhension 4 vienne extraire verticalement au moins partiellement n'importe laquelle des racks 2 depuis une des alvéoles de la grille 30 du récipient de stockage dans une position dite de prélèvement,
iii/ le deuxième organe de préhension 6 vienne extraire au moins un conteneur sélectionné dans la position de prélèvement de la colonne,
et vice-versa.

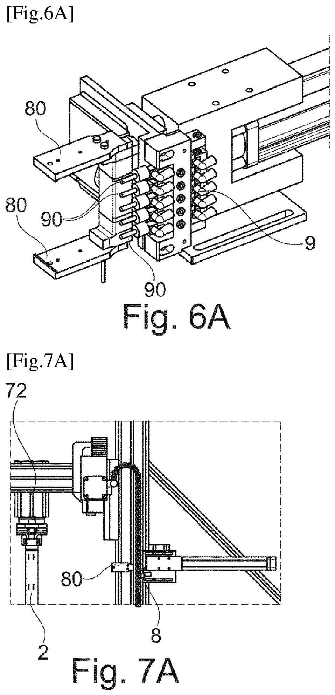

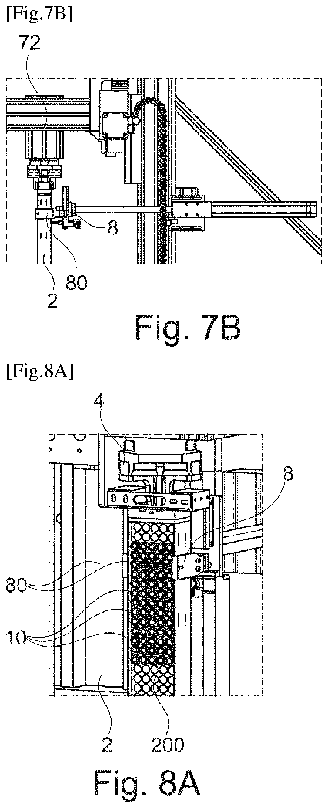

L'installation 1 peut comprendre un dispositif de bridage 8 et d'extraction 9, comme montré en figures 6 et 6A, qui est porté par l'axe de déplacement vertical 72 du robot cartésien 7. Le dispositif de bridage permet de maintenir par ses mors 80 une colonne de rangement 2 lorsqu'elle est extraite au moins partiellement d'un récipient de stockage 3. Les figures 7A et 7B montrent respectivement le dispositif de bridage dans une position de retrait, à distance et dans la position de bridage du rack 2 saisi par l'organe de préhension 4.

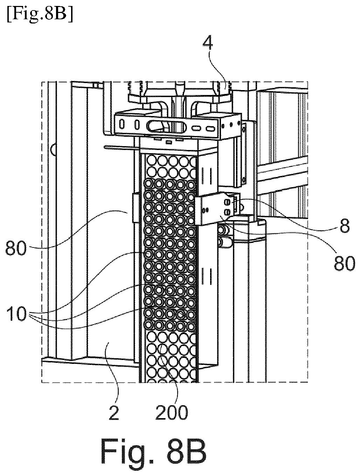

Les figures 8A et 8B montrent respectivement la position ouverte et la position fermée des mors 80 autour du rack 2 qui est saisi par le premier organe de préhension 4.

Le dispositif d'extraction 9 constitué de doigts d'extraction 90 actionnés par des vérins, typiquement pneumatiques, permet de pousser n'importe quel tube 10 d'une alvéole 200 d'une colonne de rangement 2 lorsqu'elle est extraite au moins partiellement d'un récipient de stockage.

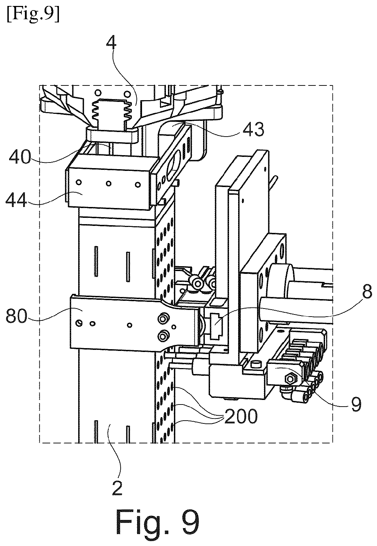

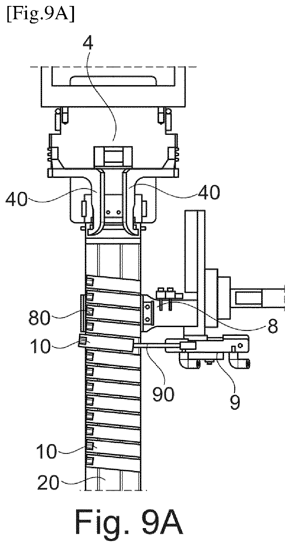

Les figures 9 et 9A montrent l'extraction, depuis son logement 200 d'un rack 2, d'un tube 10 d'échantillon qui est réalisée par poussée au moyen d'un doigt d'extraction 90.

Un bac de transfert 100, porté par l'axe de déplacement longitudinal X du premier robot cartésien 7 et agencé dans la zone circulaire de déplacement du robot six axes 5 est prévu loger une pluralité de boites de rangement à compartiments multiples 11 des tubes d'échantillons 10.

A une extrémité de l'axe de déplacement longitudinal X du premier robot cartésien 7 est agencé un poste de préparation 12 depuis lequel un opérateur peut amener un ou plusieurs conteneurs 10 ou une ou plusieurs boites 11.

L'axe de déplacement longitudinal du premier robot cartésien 7 peut déplacer le bac de transfert 100 dans le poste de préparation 12.

Le poste de préparation 12 peut comprendre un deuxième robot cartésien 13 à trois axes de déplacement, adapté pour amener les conteneurs 10 ou les boites 11 dans un sas de récupération des échantillons biologiques par un opérateur.

Ce deuxième robot cartésien 13 porte sur son axe vertical Z, un troisième organe de préhension 14 adapté pour manipuler à l'unité les boites de rangement 11 et sur son axe latéral Y un tiroir de chargement 15.

Enfin, un bac de transfert statique 16 pouvant contenir des boites de rangement 11 est logé dans le poste de préparation 12.

Comme illustré en figure 3, chaque rack 2 comprend avantageusement au moins deux sondes de mesure de température sans fil, dont une 21 est agencée sur une face supérieure du rack et l'autre 22 est agencée sur la face inférieure. Les sondes 21, 22 sont reliées par câbles à une carte électronique (PCB acronyme anglo-saxon pour « Printed Circuit Board ») qui peut être individualisée, i.e. une carte électronique 23, 24 par sonde respectivement 21, 22 . La mesure de température de la face supérieure du rack est réalisée seulement lorsque l'organe de préhension 4 embarqué sur l'axe vertical du robot cartésien 7 est en contact avec le rack souhaité (figure 7). Cela peut être mis en oeuvre par des pointes de touches agencées sur le préhenseur. Le relevé de température permet d'autoriser ou non la sortie du rack en fonction de la température relevée sur ce dernier. Le relevé de température de la seconde sonde de température 22, voire d'une troisième sonde de température 25 placée au milieu du rack permet d'avoir une cartographie thermique des racks notamment lorsque ceux-ci sont placés en dehors des récipients 3. Les relevés de température permettent ainsi de préserver l'intégrité des échantillons en imposant que le rack soit placé à l'intérieur de son récipient 3, lorsque sa température, notamment mesurée par la sonde 21 se rapproche de la température maximale admissible. D'autre part, les relevés de températures permettent de connaitre les gradients de températures et les contractions thermiques subies par le rack 22 et ce de manière dynamique. En effet, l'acquisition des relevés de température peut être réalisé tant que l'organe de préhension 4 est en contact avec le rack 2. Cette information permet de guider le robot multiaxes 5 en intégrant des coefficients de compensation liés à la contraction thermique, notamment lors de la phase d'extraction ou de mise en place des échantillons dans les racks.

Également comme illustré en figure 3, le rack 2 peut être équipé de moyens complémentaires et/ou en lieu et place des sondes de température 21, 22, 23 : ainsi, on peut fixer des jauges de contraintes ou des étiquettes RFID 26, 27, 28 qui peuvent intégrer des sondes de température, de préférence respectivement dans la partie inférieure, supérieure et médiane du rack 2.

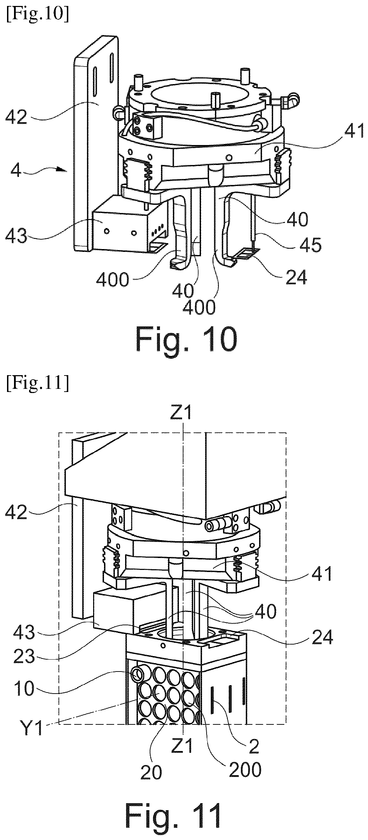

Un exemple d'organe de préhension 4, porté par l'axe vertical du robot cartésien 7 est montré en figures 10 à 12. Il comprend une pince à un ou plusieurs branches de préhension 40, sous la forme de mors avantageusement au nombre de trois concentriques et disposés à 120° l'un de l'autre.

Pour assurer la préhension d'une colonne de rangement 2, les branches de la pince 40 sont écartées l'une de l'autre, les ergots de préhension 400 viennent alors se verrouiller dans la partie creuse correspondante dans la partie supérieure de la colonne 2 (figure 11).

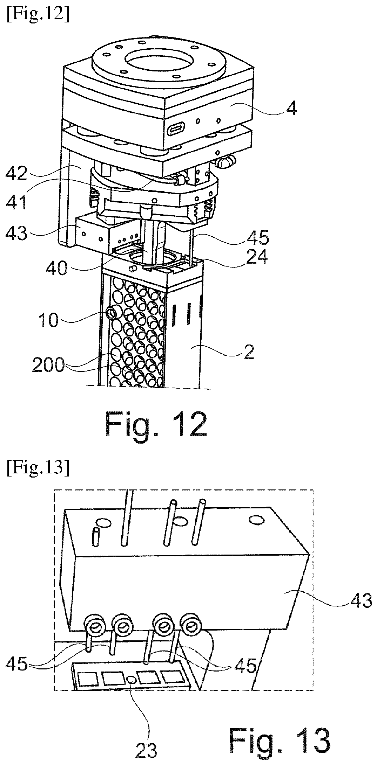

Pour compenser les défauts de positionnement et des variations géométriques des pièces suivant les axes X, Y et Z (tolérance de fabrication des tubes 10, des boites 11 et des platines de rack 2), l'organe de préhension 4 comprend également un module/organe de compliance sans effort 41, de préférence du type à ressorts de rappel intégrés agencé au-dessus des branches de la pince. La mise en oeuvre du module de compliance 41 est montrée en figure 12.

Comme montré sur les figures 10 à 12, le support de l'organe de préhension 42 supporte avantageusement au moins un boitier-support 43, 44 de pointes à touches dans lequel sont maintenues une ou plusieurs pointes à touches 45 qui vont venir, lors de la préhension du rack 2 par l'organe de préhension 4, venir en contact avec l'une et/ou l'autre des deux cartes électroniques 23, 24 du rack 2. Ces contact, dits par pointe de touche, permettent d'assurer le relevé des températures respectivement mesurées par les sondes 21 et 22 et le cas échéant 23 ou les sondes 26, 27, 28 intégrées dans les étiquettes RFID.

La figure 13 montre en détail l'agencement des pointes à touches 45 dans un boitier 43 et leur mise en regard d'une carte imprimé 23 pour le relevé des températures.

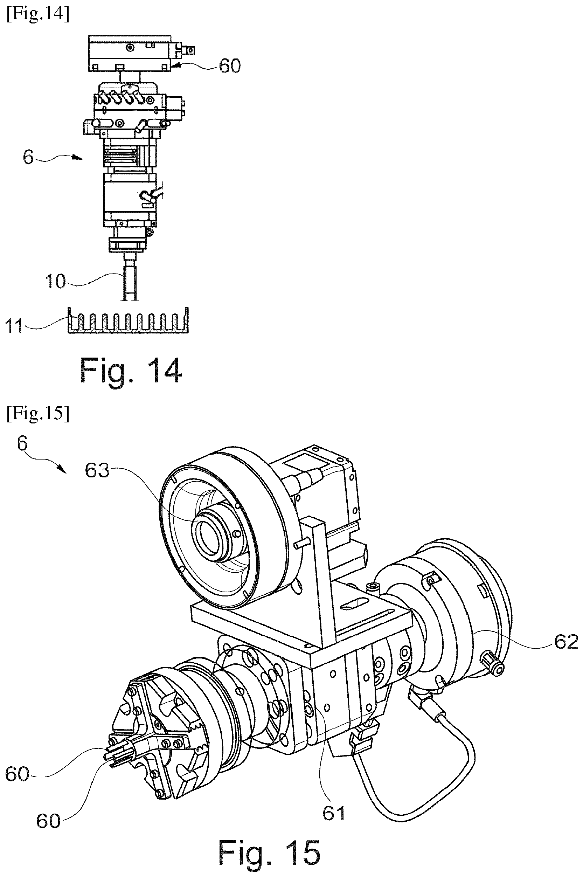

Le deuxième organe de préhension 6 est montré plus en détail en figures 14 et 15.

Il comprend une pince à un ou plusieurs doigts de préhension 60, avantageusement trois concentriques et disposés à 120° l'un de l'autre.

Pour assurer la préhension d'un tube d'échantillons 10, les doigts 60 sont rapprochés l'un de l'autre et viennent se verrouiller autour d'un tube 10 ou à l'intérieur du bouchon placé à l'extrémité du tube.

Pour compenser les défauts de positionnement et des variations géométriques des pièces suivant les axes X, Y et Z (tolérance de fabrication des tubes 10, des boites 11), l'organe de préhension 6 comprend également un module/organe de compliance sans effort 61, de préférence du type à ressorts de rappel intégrés agencé au-dessus de la pince.

L'organe de préhension 6 comprend en outre un système anticollision 62 pour éviter tout contact/collision non souhaitée avec un autre composant ainsi qu'un système d'apprentissage laser ou par vision par caméra 63 qui permet de réaliser l'apprentissage des points de prise/dépose des différents objets à manipuler par laser ou par image.

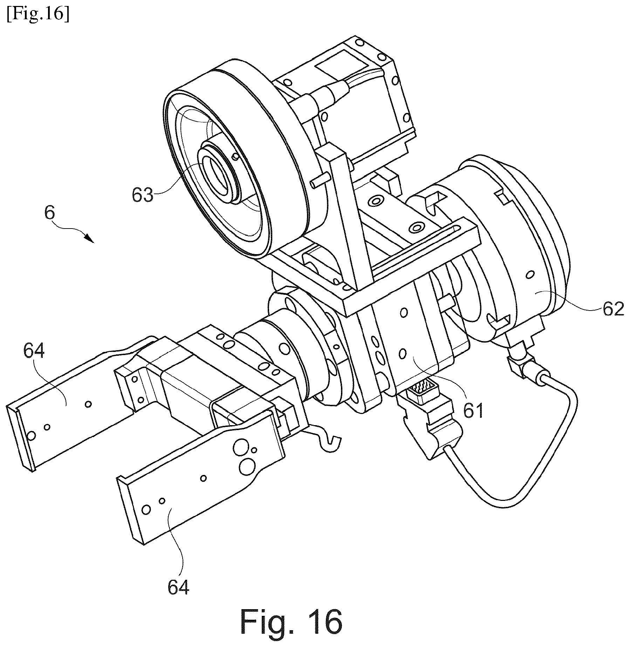

La figure 16 montre une alternative de réalisation de l'organe de préhension 6 selon laquelle les doigts de préhension 60 sont remplacés par des mors 64 du type de ceux utilisés pour l'organe de préhension 4 du robot cartésien. Avec ces mors 64, il est possible de saisir à l'unité des boites contenant une pluralité de tubes d'échantillons au lieu d'extraire ces derniers à l'unité avec les doigts 60.

On décrit maintenant les différentes étapes de fonctionnement de l'installation 1 selon l'invention mis en oeuvre par une ou plusieurs unités de contrôle-commande et des récipients de stockage 3.1 à 3.10, respectivement pour une opération de retrait de leur stockage d'un ou plusieurs conteneurs d'échantillons (tubes) 10 à l'unité vers l'extérieur de l'enceinte de l'installation et à l'inverse, pour le dépôt d'un ou plusieurs conteneurs d'échantillons (tubes) à l'unité depuis l'extérieur de l'enceinte, dans un récipient de stockage.

Un opérateur effectue une demande de dépôt d'un ou plusieurs échantillons à l'unité de contrôle-commande de l'installation 1 via une IHM (Interface Homme-Machine ).

La base de données de l'unité de contrôle-commande vérifie que le ou les emplacements des tubes d'échantillons 10 spécifiés sont disponibles dans l'un des racks 2 d'un des récipients 3.1 à 3.10.

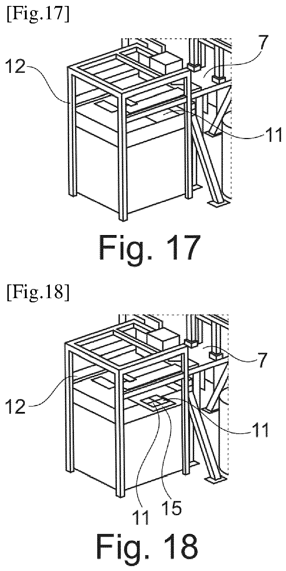

L'opérateur vient alors ouvrir le tiroir de chargement 15, puis y déposer le(s) conteneur(s) d'échantillon (s) 10 dans d'une ou plusieurs boites de transfert 11 et refermer le tiroir 15 (figures 17 et 18).

Le cas échéant, un lecteur de type à code barre (non représenté) placé sous la zone de stockage des boites de transfert 11, vient scanner un code sur le tube à échantillons 10.

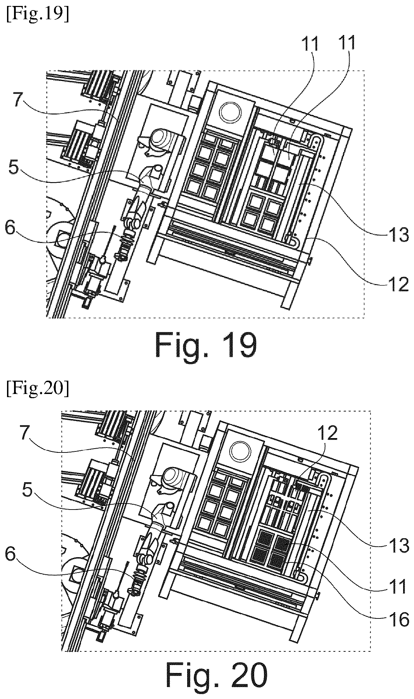

Le deuxième robot cartésien 13 effectue alors le transfert de la(des) boite(s) de transfert 11 placée sur le tiroir de chargement 15 vers le bac de transfert statique 16, de préférence alimenté en azote liquide (figures 19 et 20).

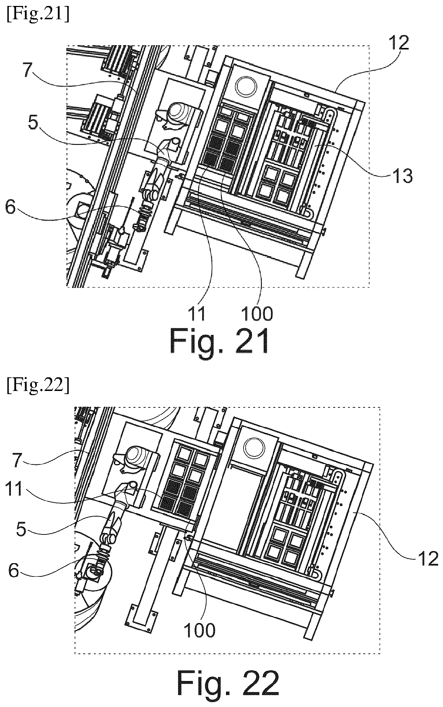

Le deuxième robot cartésien 13 effectue le transfert de la ou des boites de transfert 11 placées dans le bac de transfert statique 16 dans le bac de transfert embarqué 100 dans le premier robot cartésien 7 (figure 21).

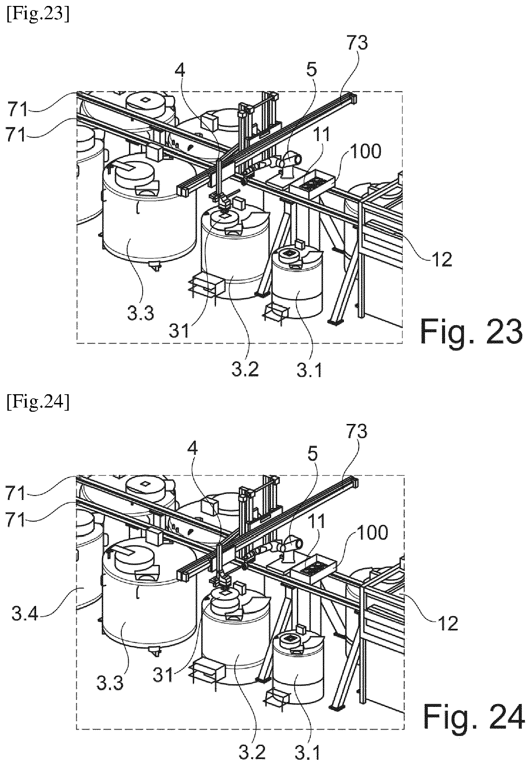

Ce dernier effectue alors un déplacement longitudinal X et latéral Y, ce qui amène le bac de transfert embarqué 100 en dehors du poste de préparation 12 (figure 22) puis à proximité du récipient de stockage (Cryo-conservateur) 3.2 sélectionné (figure 23).

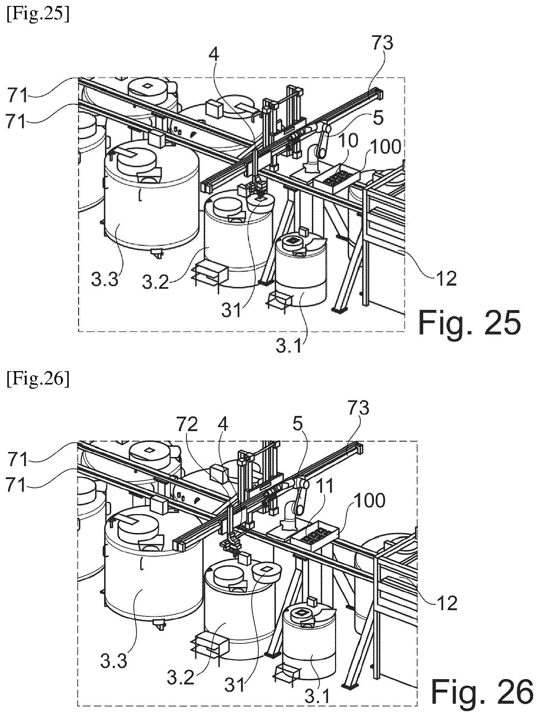

L'organe de préhension 4 effectue alors le retrait du bouchon 31 du Cryo-conservateur 3.2 sélectionné (figures 23 à 25). Pour un retrait d'un bouchon 31 à ouverture partielle, le robot cartésien 7 réalise un déplacement vertical vers le bas (figure 23), puis une préhension du couvercle 31 par l'organe de préhension (figure 24), un déplacement vertical vers le haut puis un déplacement latéral, un déplacement vertical vers le bas et enfin la dépose du bouchon (figure 25).

Lorsque le cryo-conservateur est à ouverture totale seule une commande électrique par l'unité de contrôle-commande de l'installation ou du robot cartésien 7 est nécessaire.

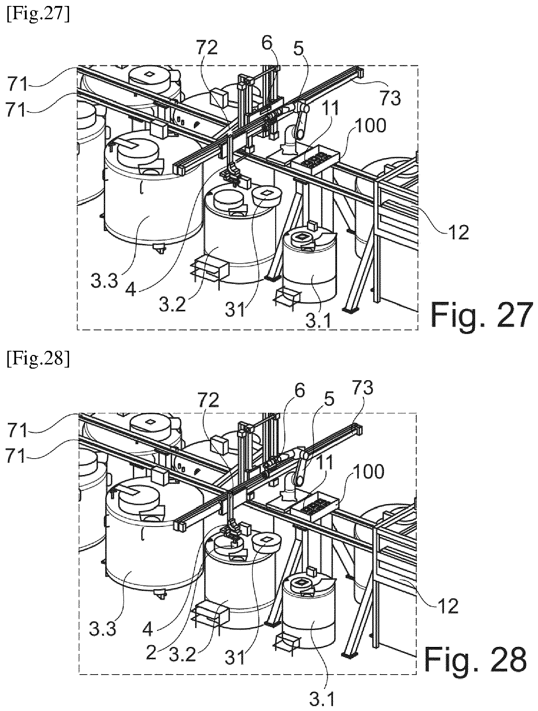

L'organe de préhension 4 est alors positionné à la verticale du rack ciblé 2 par déplacement du robot cartésien 7 selon son axe vertical 73 (figures 26 et 27).

L'organe de préhension 4 vient alors effectuer la préhension du rack sélectionné 2 (figure 28) et le relevé des températures du rack 2 est réalisé au moins au moyen des sondes de température 21 et 22.

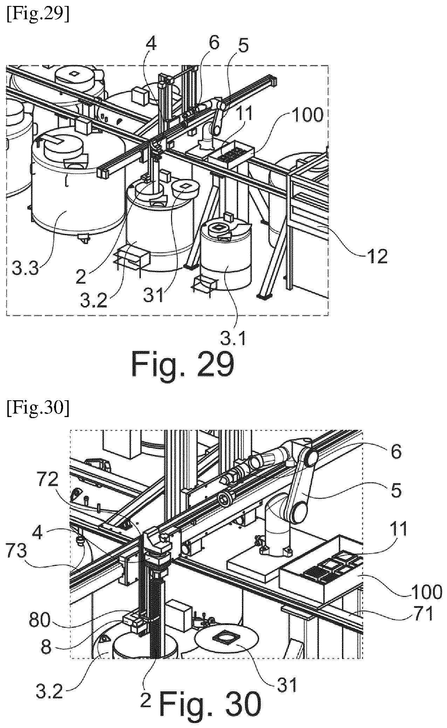

Le rack 2 est alors extrait par translation verticale uniquement du robot cartésien 7 (figure 29). Pendant ce temps d'extraction, les températures sont mesurées en continu.

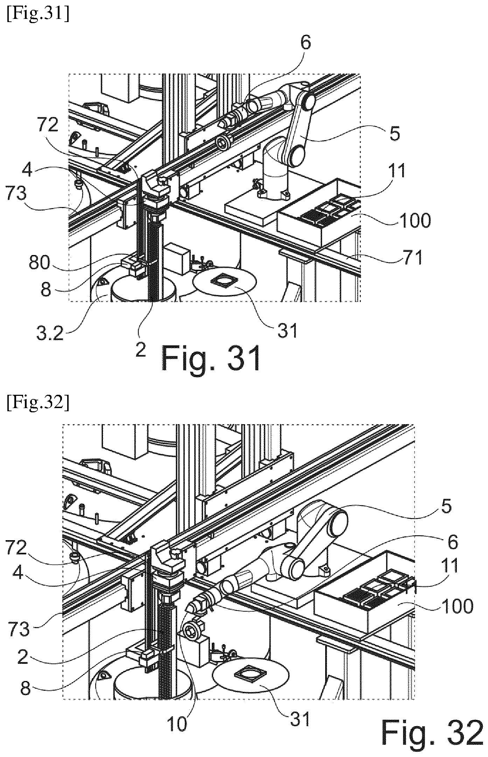

Puis le dispositif de bridage 8 est déplacé (figures 30 et 31) et actionné afin de brider le rack 2 dans sa position d'extraction par la bride 80 (figure 32).

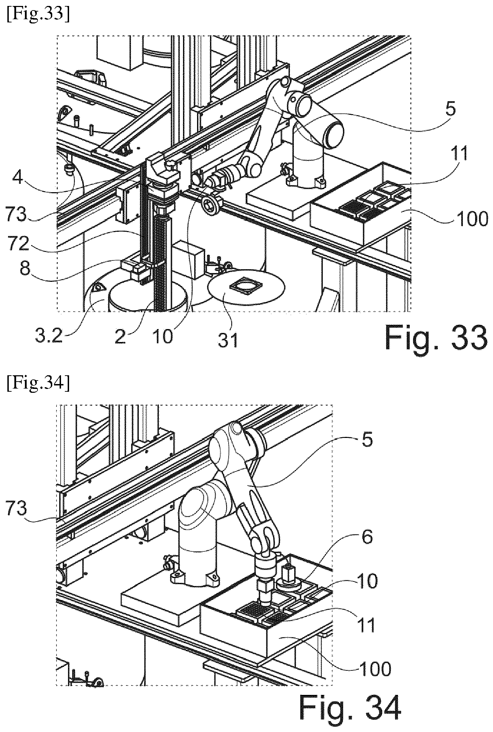

Dans cette position extraite et bridée du rack 2, l'organe de préhension 6 en bout de bras de robot six axes 5 vient extraire le ou les tubes d'échantillons souhaités 10 de la structure alvéolée 20 puis vient les amener à l'unité dans la boite de transfert 11 placée dans le bac de transfert 100 (figures 33 et 34). A l'inverse, l'organe de préhension 6 peut prélever d'autres échantillons 10 déjà présents dans un ou plusieurs des boîtes de transfert 11 pour les loger dans le rack 2 en position extraite et bridée. Pendant ces opérations, le robot six axes 5 est guidé par assistance caméra et l'unité de contrôle-commande intègre des coefficients de compensation associés aux relevés de température effectués afin d'effectuer les corrections de déplacement nécessaires. Également pendant ces opérations, le bac de transfert 100 est alimenté en azote liquide en continu pour maintenir à très basse température les boites de transfert 11 et les tubes d'échantillons 10 placés dedans.

Le cas échéant, à ce stade une lecture de code-barres est réalisée sur les tubes d'échantillons prélevés afin de les identifier.

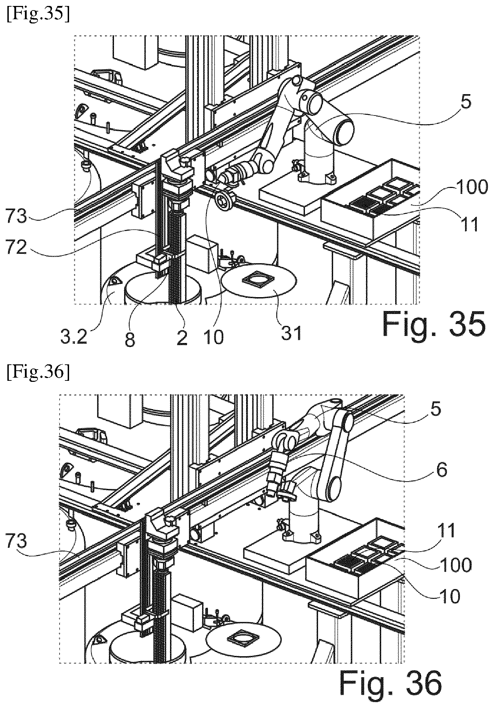

Une fois les tubes d'échantillons 10 prélevés et logés dans la ou les boîtes de transfert 11 et ceux stockés dans les alvéoles 200 du rack 2, le robot cartésien 7 procède à la remise en place du rack 2 dans le cryo-conservateur 3.2 par le débridage de la pince 80 puis le déplacement vertical vers le bas par l'axe de déplacement 73 (figures 35 à 37). Cette opération de remise en place du rack 2 dans cryo-conservateur avant bridage et/ou après débridage peut également être réalisée, si la mesure des températures du rack 2 indique qu'au moins une des températures est trop élevée.

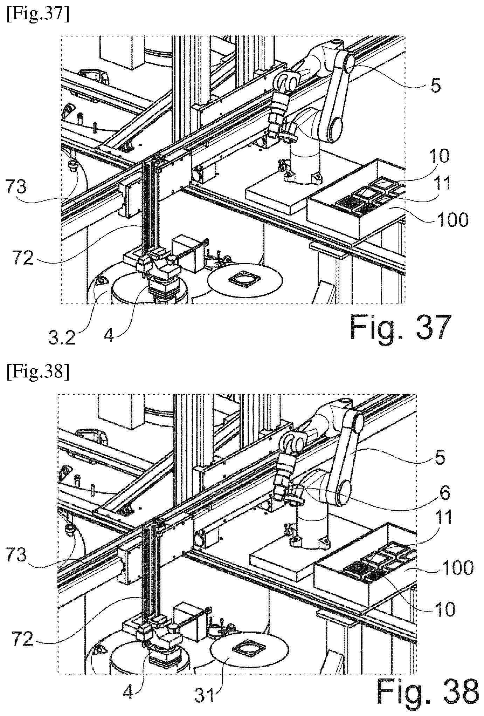

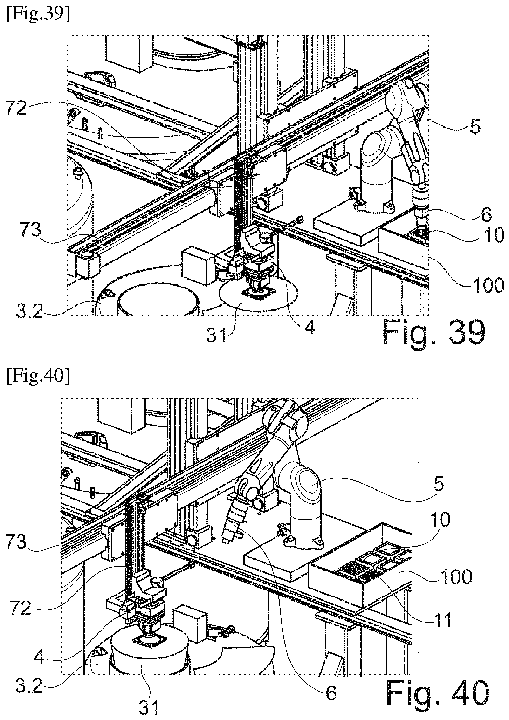

Le bouchon 31 du cryo-conservateur 3.2 est alors remis en place à l'aide du robot cartésien 7 (figures 38 à 41) ou par fermeture du couvercle 31 du cryo-conservateur 3.2 par commande électrique dans le cas d'un récipient à ouverture totale.

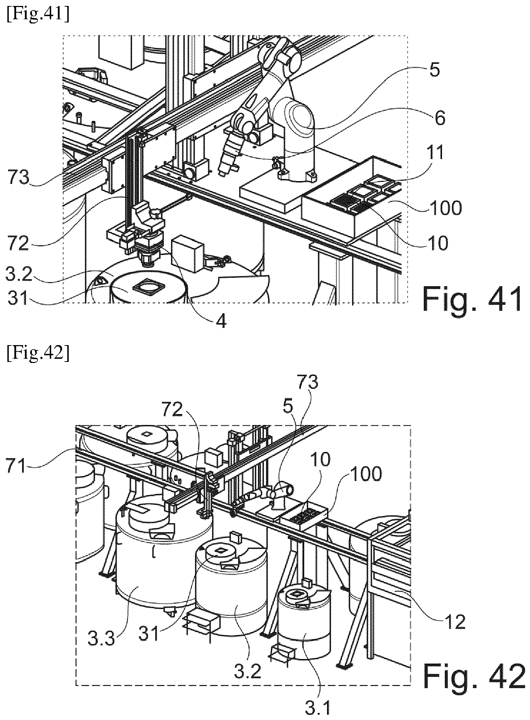

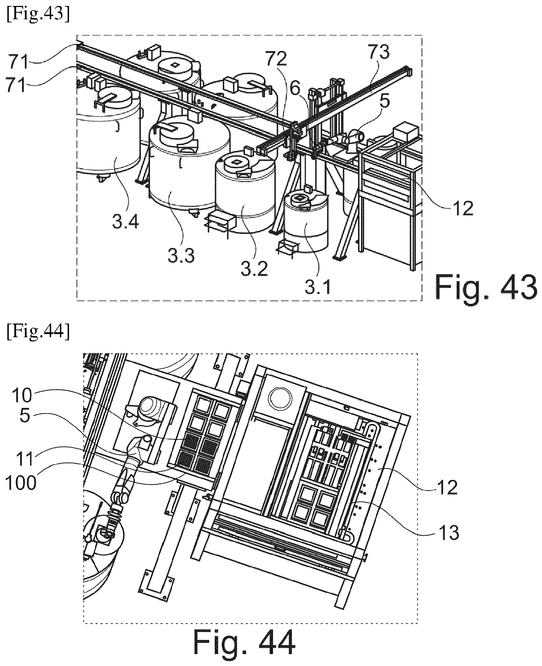

L'unité de contrôle-commande commande alors le déplacement du robot 7 vers un autre cryo-conservateur ou en vue d'un retour à la zone d'accostage dans le poste de préparation 12 (figures 42 et 43).

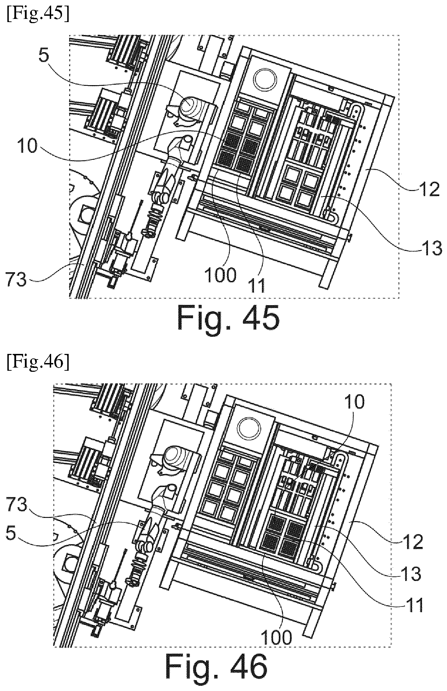

Le robot cartésien 13 vient alors remettre les boites de transfert 11 vides ou celles contenant des tubes d'échantillons extraits 10 qui sont dans le bac de transfert 100, sur le tiroir de chargement 15 (figures 44 à 46).

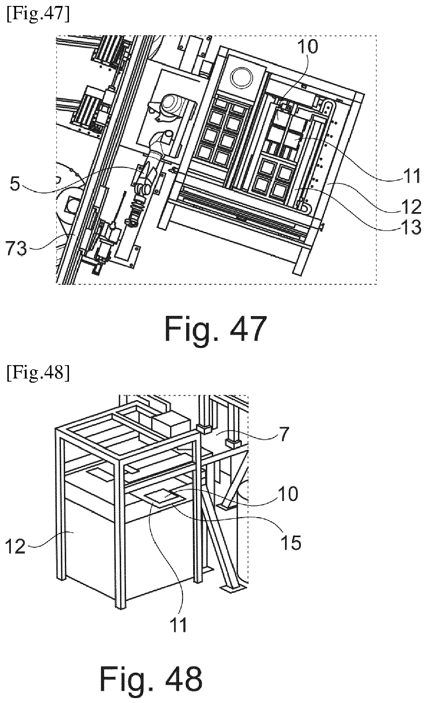

Lorsque l'opérateur effectue une demande de récupération des boites de transfert 11, le robot cartésien 13 vient retirer celles-ci du tiroir de chargement (figures 47 et 48).

D'autres variantes et améliorations peuvent être envisagées sans pour autant sortir du cadre de l'invention tel que défini dans les revendications jointes.

Par exemple, si dans les modes illustrés le robot cartésien est porté par un bâti au sol on peut tout aussi bien prévoir de le suspendre au plafond par un portique adapté.

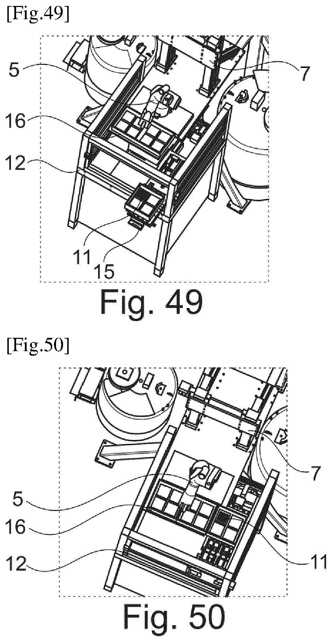

Une autre variante, qui n'est pas comprise dans les revendications, est illustrée aux figures 49 à 51 où le robot cartésien 13 est remplacé par le robot six axes 5 lui-même. Autrement dit, selon cette variante, le poste de préparation 12 ne comprend plus de robot cartésien 13 qui lui est propre, les fonctions de ce dernier étant remplacées par le robot 6 axes 5, qui une fois arrimé dans sa zone d'accostage à proximité du poste de préparation 12 vient effectuer lui-même par l'organe de préhension 4 qu'il supporte les opérations de prélèvement de tubes d'échantillons 10, de transfert des boites transfert 11 placées dans le bac de transfert statique 16 vers le bac de transfert embarqué 100 comme explicité en référence aux figures 17 à 21 ou vice-versa.

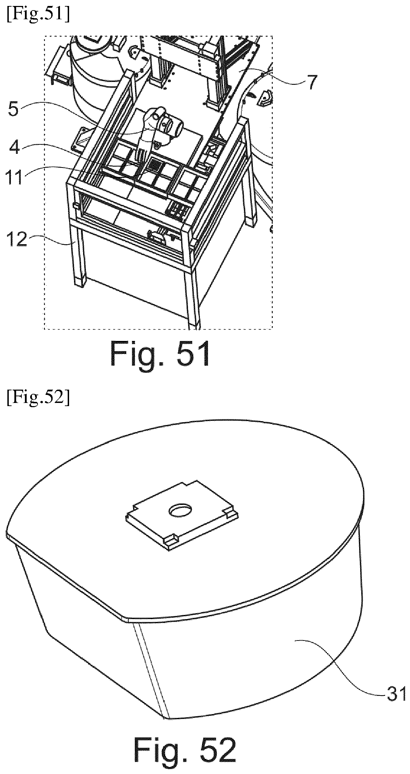

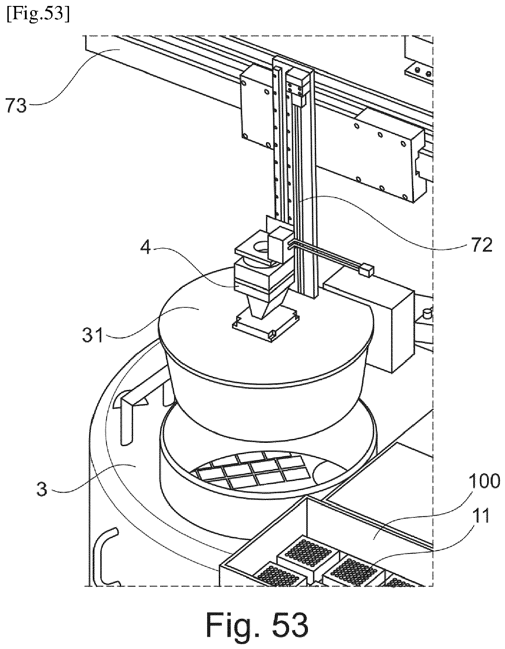

Les figures 52 et 53 montrent encore un autre exemple de modification qui peut être apporté à l'installation sans pour sortir du cadre de l'invention. Ici, le bouchon 31 d'une cuve (cryo-conservateur) à ouverture partielle est modifié. Comme montré en figure 53, l'organe de préhension 4 effectue le retrait et la préhension du bouchon 31 à ouverture partielle par le robot cartésien 7 qui réalise un déplacement vertical vers le bas. Un déplacement vertical vers le haut permet le soulèvement du bouchon 31.

## Revendications

1. Installation (1) de manipulation et de stockage d'échantillons biologiques à très basses températures, notamment dans des conditions cryogéniques comprenant :
- une pluralité de colonnes de rangement (2), chacune s'étendant selon un axe longitudinal (Z1) et présentant une structure (20) adaptée pour recevoir par translation et loger une pluralité de conteneurs (10) adaptés chacun pour contenir un ou des échantillons biologiques;
- une pluralité de récipients de stockage (3), à isolation thermique, alignés selon au moins une rangée, l'intérieur de chaque récipient étant apte à être soumis à de très basses températures, chaque récipient comprenant dans sa partie supérieure une grille alvéolée (30) dont chaque alvéole (300) est adaptée pour recevoir à la verticale une de la pluralité des colonnes de rangement;
- un premier organe de préhension (4), adapté pour saisir à l'unité une colonne de rangement;
- un robot à bras articulé (5) à au moins cinq degrés de liberté, dit robot à au moins cinq axes, le bras du robot étant adapté pour se déplacer dans n'importe quelle position au sein d'une zone circulaire de déplacement, l'extrémité (50) du bras du robot étant munie d'un deuxième organe de préhension (6), adapté pour saisir à l'unité un conteneur d'échantillon ou une boite de rangement à compartiments multiples, chaque compartiment étant adapté pour loger un conteneur (10);
- un premier robot cartésien (7), agencé au-dessus de la (des) rangée(s) de récipients de stockage, le premier robot cartésien étant à au moins deux axes (71, 72) dont un axe de déplacement longitudinal (X) est parallèle à la direction d'alignement de la (des) rangée(s) et un axe de déplacement vertical (Z); le premier robot cartésien étant adapté pour porter et déplacer, selon son axe de déplacement longitudinal, le robot à au moins cinq axes, et pour porter et déplacer selon la verticale, le premier organe de préhension ;
l'installation étant configurée de sorte que :
i/ le premier robot cartésien puisse déplacer le robot à au moins cinq axes à proximité de l'un quelconque des récipients de stockage,
ii/ le premier organe de préhension vienne extraire verticalement au moins partiellement n'importe laquelle des colonnes (2) depuis une des alvéoles de la grille (30) du récipient de stockage dans une position dite de prélèvement,
iii/ le deuxième organe de préhension vienne extraire au moins un conteneur sélectionné dans la position de prélèvement de la colonne,
et vice-versa.

2. Installation (1) selon la revendication 1, le robot à bras articulé étant un robot cinq, six ou sept axes.

3. Installation (1) selon la revendication 1 ou 2, les récipients de stockage étant alignés selon deux rangées parallèles délimitant un espace dans lequel l'(les) axe(s) de déplacement longitudinal (71) du premier robot cartésien est(sont) agencé(s).

4. Installation (1) selon l'une des revendications 1 à 3, dans laquelle :
la structure de chaque colonne de rangement est une structure en nid d'abeille dont les alvéoles (200) s'étendent selon un axe sécant (Y1) avec l'axe longitudinal (Z1), chaque alvéole d'une colonne de rangement étant adapté pour recevoir et loger à l'unité un de la pluralité de conteneurs (T);
le deuxième organe de préhension étant adapté pour saisir à l'unité un conteneur,
l'installation étant configurée de sorte que iii/ le deuxième organe de préhension vienne extraire à l'unité n'importe lequel des conteneurs sélectionné dans la position de prélèvement de la colonne,
l'installation comprenant de préférence:
un dispositif de bridage (8), porté par l'axe de déplacement vertical du robot cartésien, le dispositif de bridage étant adapté pour maintenir par bridage une colonne de rangement lorsqu'elle est extraite au moins partiellement d'un récipient de stockage, et/ou
un dispositif d'extraction (9), porté par l'axe de déplacement vertical du robot cartésien, le dispositif d'extraction étant adapté pour pousser n'importe quel conteneur d'une alvéole d'une colonne de rangement lorsqu'elle est extraite au moins partiellement d'un récipient de stockage, le dispositif d'extraction comprenant de préférence un ou plusieurs vérins (90) en tant que moyen(s) de poussée.

5. Installation (1) selon l'une des revendications 1 à 3, dans laquelle :
la structure de chaque colonne de rangement est divisée en une pluralité de tiroirs de rangement, adaptés chacun pour recevoir par translation une d'une pluralité des boites de rangement à compartiments multiples, chaque compartiment étant adapté pour loger un conteneur (10) adapté chacun pour contenir un ou des échantillons biologiques ;
le deuxième organe de préhension étant adapté pour saisir à l'unité une boîte de rangement; l'installation étant configurée de sorte que iii/ le deuxième organe de préhension vienne extraire à l'unité n'importe laquelle des boites de rangement sélectionnée dans la position de prélèvement de la colonne.

6. Installation (1) selon l'une quelconque des revendications précédentes, le premier robot cartésien étant à trois axes, le troisième axe (73) étant un axe de déplacement latéral adapté pour déplacer latéralement le premier organe de préhension au moins à l'aplomb de n'importe quelle alvéole de la grille de n'importe lequel des récipients de stockage.

7. Installation (1) selon l'une des revendications précédentes, comprenant :
- au moins un bac de transfert (100), porté par l'axe de déplacement longitudinal du premier robot cartésien et agencé dans la zone circulaire de déplacement du robot à au moins cinq axes, le bac de transfert étant adapté pour loger une pluralité de boites de rangement (11).
- un poste de préparation (12) depuis lequel un opérateur peut amener un ou plusieurs conteneurs ou une ou plusieurs boite(s) à compartiments multiples,
l'installation étant configurée de sorte que l'axe de déplacement longitudinal du premier robot cartésien puisse déplacer le bac de transfert dans le poste de préparation, le poste de préparation comprenant de préférence un deuxième robot cartésien (13) à au moins deux axes, adapté pour amener les conteneurs ou les boites dans un sas de récupération des échantillons biologiques par un opérateur.

8. Installation (1) selon l'une des revendications précédentes, comprenant des moyens d'instrumentation de mesure embarqués sur chaque structure de colonne de rangement, les moyens d'instrumentation comprenant de préférence au moins une sonde de température et/ou au moins une jauge de déformation et/ou un moyen d'identification par radiofréquence (RFID) et/ou un transpondeur, plus de préférence au moins deux sondes de température par colonne de rangement, dont une agencée à une extrémité longitudinale et l'autre agencée à l'extrémité longitudinale opposée.

9. Installation (1) selon l'une des revendications précédentes, comprenant un bâti (70) au sol ou au plafond qui porte le premier robot cartésien ou un portique qui porte le premier robot cartésien en suspension au-dessus de la(des) rangée(s) de récipients de stockage.

10. Installation (1) selon l'une des revendications précédentes, comprenant une enceinte à environnement contrôlé comprenant un accès sécurisé, notamment au poste de préparation pour un opérateur depuis l'extérieur, l'enceinte étant configurée pour loger la pluralité des conteneurs et boites de rangement, la pluralité des colonnes de rangement, les récipients de stockage, le robot à au moins cinq axes, les organes de préhension, le(s) robot(s) cartésien(s) et le cas échéant le bâti ou le portique.

11. Installation selon l'une des revendications précédentes, les récipients de stockage comprenant chacun un couvercle (31) pour fermer le(s) récipient(s) qui est (sont) en configuration de stockage, c'est-à-dire non concerné(s) par l'extraction ou réciproquement l'insertion d'une colonne en son (leur) sein.

12. Installation selon la revendication 11, l'unité de contrôle-commande du premier robot cartésienne étant adaptée pour commander l'ouverture et réciproquement la fermeture de chaque récipient de stockage.

13. Installation selon l'une des revendications précédentes, les conteneurs étant des tubes de conservation (10).

14. Installation selon l'une des revendications précédentes, le ou les récipients de stockage fonctionnant à des conditions cryogéniques, notamment par azote liquide en tant que source de froid.

15. Utilisation de l'installation (1) selon l'une des revendications précédentes, pour stocker des échantillons biologiques dans des conditions cryogéniques sous enceinte à environnement contrôlé.

## Patentansprüche

1. Anlage (1) zum Handhaben und Lagern von biologischen Proben bei sehr niedrigen Temperaturen, insbesondere unter kryogenen Bedingungen, umfassend:
- mehrere Racks (2), wobei jedes sich entlang einer Längsachse (Z1) erstreckt und eine Struktur (20) aufweist, die dazu eingerichtet ist, mehrere Behälter (10) durch Translation aufzunehmen und unterzubringen, die jeweils dazu eingerichtet sind, eine oder mehrere biologische Proben zu enthalten;
- mehrere wärmeisolierte Lagergefäße (3), die in mindestens einer Reihe angeordnet sind, wobei das Innere jedes Gefäßes geeignet ist, sehr niedrigen Temperaturen ausgesetzt zu werden, wobei jedes Gefäß in seinem oberen Teil ein wabenförmiges Gitter (30) umfasst, bei dem jede Wabe (300) dazu eingerichtet ist, eines der mehreren Racks in vertikaler Richtung aufzunehmen;
- ein erstes Greiforgan (4), das dazu eingerichtet ist, ein einzelnes Rack zu greifen;
- einen Gelenkarmroboter (5) mit mindestens fünf Freiheitsgraden, Roboter mit mindestens fünf Achsen genannt, wobei der Arm des Roboters dazu eingerichtet ist, sich in jede beliebige Position innerhalb eines kreisförmigen Bewegungsbereichs zu bewegen, wobei das Ende (50) des Armes des Roboters mit einem zweiten Greiforgan (6) ausgestattet ist, das dazu eingerichtet ist, einen einzelnen Probenbehälter oder eine Aufbewahrungsbox mit mehreren Fächern zu greifen, wobei jedes Fach dazu eingerichtet ist, einen Behälter (10) unterzubringen;
- einen ersten kartesischen Roboter (7), der oberhalb der Reihe(n) von Lagergefäßen angeordnet ist, wobei der erste kartesische Roboter mindestens zwei Achsen (71, 72) aufweist, darunter eine Längsbewegungsachse (X), die parallel zur Richtung der Ausrichtung der Reihe(n) ist, und eine vertikale Bewegungsachse (Z); wobei der erste kartesische Roboter dazu eingerichtet ist, entlang seiner Längsbewegungsachse den Roboter mit mindestens fünf Achsen zu tragen und zu bewegen und entlang der Vertikalen das erste Greiforgan zu tragen und zu bewegen; wobei die Anlage so gestaltet ist, dass:
i/ der erste kartesische Roboter den Roboter mit mindestens fünf Achsen in die Nähe jedes beliebigen der Lagergefäße bewegen kann,
ii/ das erste Greiforgan jedes beliebige der Racks (2) aus einer der Waben des Gitters (30) des Lagergefäßes in einer sogenannten Entnahmeposition wenigstens teilweise vertikal herauszieht,
iii/ das zweite Greiforgan mindestens einen ausgewählten Behälter in der Entnahmeposition des Racks herauszieht,
und umgekehrt.

2. Anlage (1) nach Anspruch 1, wobei der Gelenkarmroboter ein Roboter mit fünf, sechs oder sieben Achsen ist.

3. Anlage (1) nach Anspruch 1 oder 2, wobei die Lagergefäße in zwei parallelen Reihen ausgerichtet sind, die einen Zwischenraum begrenzen, in welchem die Längsbewegungsachse(n) (71) des ersten kartesischen Roboters angeordnet ist (sind).

4. Anlage (1) nach einem der Ansprüche 1 bis 3, wobei: die Struktur jedes Racks eine bienenwabenförmige Struktur ist, deren Waben (200) sich entlang einer sich mit der Längsachse (Z1) schneidenden Achse (Y1) erstrecken, wobei jede Wabe eines Racks dazu eingerichtet ist, einen einzelnen der mehreren Behälter (T) aufzunehmen und unterzubringen;
das zweite Greiforgan dazu eingerichtet ist, einen einzelnen Behälter zu greifen,
die Anlage so gestaltet ist, dass iii/ das zweite Greiforgan jeden beliebigen ausgewählten von den Behältern in der Entnahmeposition des Racks einzeln herauszieht,
wobei die Anlage vorzugsweise umfasst:
eine Spannvorrichtung (8), die von der vertikalen Bewegungsachse des kartesischen Roboters getragen wird, wobei die Spannvorrichtung dazu eingerichtet ist, ein Rack durch Festspannen zu halten, wenn es wenigstens teilweise aus einem Lagergefäß herausgezogen worden ist, und/oder
eine Entnahmevorrichtung (9), die von der vertikalen Bewegungsachse des kartesischen Roboters getragen wird, wobei die Entnahmevorrichtung dazu eingerichtet ist, einen beliebigen Behälter aus einer Wabe eines Racks herauszudrücken, wenn es wenigstens teilweise aus einem Lagergefäß herausgezogen worden ist, wobei die Entnahmevorrichtung vorzugsweise einen oder mehrere Zylinder (90) als Schiebemittel umfasst.

5. Anlage (1) nach einem der Ansprüche 1 bis 3, wobei: die Struktur jedes Racks in mehrere Aufbewahrungseinschübe aufgeteilt ist, die jeweils dazu eingerichtet sind, eine von mehreren Aufbewahrungsboxen mit mehreren Fächern durch Translation aufzunehmen, wobei jedes Fach dazu eingerichtet ist, einen Behälter (10) unterzubringen, der jeweils dazu eingerichtet ist, eine oder mehrere biologische Proben zu enthalten;
das zweite Greiforgan dazu eingerichtet ist, eine einzelne Aufbewahrungsbox zu greifen;
die Anlage so gestaltet ist, dass iii/ das zweite Greiforgan jede beliebige ausgewählte von den Aufbewahrungsboxen in der Entnahmeposition des Racks einzeln herauszieht.

6. Anlage (1) nach einem der vorhergehenden Ansprüche, wobei der erste kartesische Roboter drei Achsen aufweist, wobei die dritte Achse (73) eine seitliche Bewegungsachse ist, die dazu eingerichtet ist, das erste Greiforgan seitwärts wenigstens senkrecht über jede beliebige Wabe des Gitters jedes beliebigen Lagergefäßes zu bewegen.

7. Anlage (1) nach einem der vorhergehenden Ansprüche, umfassend:
- mindestens eine Transferschale (100), die von der Längsbewegungsachse des ersten kartesischen Roboters getragen wird und in dem kreisförmigen Bewegungsbereich des Roboters mit mindestens fünf Achsen angeordnet ist, wobei die Transferschale dazu eingerichtet ist, mehrere Aufbewahrungsboxen (11) unterzubringen,
- eine Vorbereitungsstation (12), von der aus ein Bediener einen oder mehrere Behälter oder eine oder mehrere Boxen mit mehreren Fächern zuführen kann,
wobei die Anlage so gestaltet ist, dass die Längsbewegungsachse des ersten kartesischen Roboters die Transferschale in die Vorbereitungsstation bewegen kann, wobei die Vorbereitungsstation vorzugsweise einen zweiten kartesischen Roboter (13) mit mindestens zwei Achsen umfasst, der dazu eingerichtet ist, die Behälter oder die Boxen in eine Schleuse zur Entnahme der biologischen Proben durch einen Bediener einzuführen.

8. Anlage (1) nach einem der vorhergehenden Ansprüche, welche an jeder Rackstruktur befindliche Mittel der Messinstrumentierung umfasst, wobei die Instrumentierungsmittel vorzugsweise mindestens einen Temperatursensor und/oder einen Dehnungsmessstreifen und/oder ein Mittel zur Identifizierung über Funk (RFID) und/oder einen Transponder umfassen, sowie vorzugsweise mindestens zwei Temperatursensoren pro Rack, von denen einer an einem Längsende und der andere am entgegengesetzten Längsende angeordnet ist.

9. Anlage (1) nach einem der vorhergehenden Ansprüche, welche ein Gestell (70) auf dem Boden oder an der Decke, welches den ersten kartesischen Roboter trägt, oder einen Portalrahmen, welcher den ersten kartesischen Roboter trägt, umfasst, so dass er über der (den) Reihe (n) von Lagergefäßen hängt.

10. Anlage (1) nach einem der vorhergehenden Ansprüche, welche einen Raum mit kontrollierten Umgebungsbedingungen umfasst, welcher einen gesicherten Zugang umfasst, insbesondere an der Vorbereitungsstation für einen Bediener von außen, wobei der Raum dafür ausgelegt ist, die mehreren Behälter und Aufbewahrungsboxen, die mehreren Racks, die Lagergefäße, den Roboter mit mindestens fünf Achsen, die Greiforgane, den (die) kartesischen Roboter und gegebenenfalls das Gestell oder den Portalrahmen unterzubringen.

11. Anlage nach einem der vorhergehenden Ansprüche, wobei die Lagergefäße jeweils einen Deckel (31) zum Verschließen des (der) Behälter(s) umfassen, welche(r) sich in Lagerkonfiguration befindet (befinden), das heißt nicht von der Entnahme oder, umgekehrt, dem Einsetzen eines Racks aus seinem (ihrem) Inneren bzw. in sein (ihr) Inneres betroffen ist (sind).

12. Anlage nach Anspruch 11, wobei die Kontroll- und Steuereinheit des ersten kartesischen Roboters dazu eingerichtet ist, das Öffnen und, umgekehrt, das Schließen jedes Lagergefäßes zu steuern.

13. Anlage nach einem der vorhergehenden Ansprüche, wobei die Behälter Konservierungsröhrchen (10) sind.

14. Anlage nach einem der vorhergehenden Ansprüche, wobei das oder die Lagergefäße unter kryogenen Bedingungen arbeiten, insbesondere mit flüssigem Stickstoff als Kältequelle.

15. Verwendung der Anlage (1) nach einem der vorhergehenden Ansprüche zum Lagern von biologischen Proben unter kryogenen Bedingungen in einem Raum mit kontrollierten Umgebungsbedingungen.

## Claims

1. Installation (1) for handling and storing biological samples at very low temperatures, in particular under cryogenic conditions, comprising:
- a plurality of storage columns (2), each extending along a longitudinal axis (Z1) and having a structure (20) adapted to receive translationally and to house a plurality of containers (10) each adapted to contain one or more biological samples;
- a plurality of thermally insulated storage containers (3) aligned in at least one row, the interior of each container being able to be subjected to very low temperatures, each container comprising in its upper part a honeycomb grid (30), each cell (300) of which is adapted to receive vertically one of the plurality of storage columns;
- a first gripping member (4), adapted to grip a storage column individually;
- an articulated-arm robot (5) with at least five degrees of freedom, referred to as at least five-axis robot, the robot arm being adapted to move in any position within a circular zone of movement, the end (50) of the robot arm being provided with a second gripping member (6), adapted to grip a sample container or a multi-compartment storage box individually, each compartment being adapted to house a container (10);
- a first Cartesian robot (7), arranged above the row(s) of storage containers, the first Cartesian robot having at least two axes (71, 72): a longitudinal movement axis (X), which is parallel to the direction of alignment of the row(s), and a vertical movement axis (Z); the first Cartesian robot being adapted to carry and move, along its longitudinal movement axis, the at least five-axis robot, and to carry and move vertically the first gripping member;
the installation being configured so that:
i/ the first Cartesian robot can move the at least five-axis robot in the vicinity of any of the storage containers,
ii/ the first gripping member retrieves vertically and at least partially any one of the columns (2) from one of the cells of the storage container grid (30) in a so-called pick-up position,
iii/ the second gripping member retrieves at least one selected container in the pick-up position of the column,
and vice versa.

2. Installation (1) according to Claim 1, the articulated-arm robot being a five-, six- or seven-axis robot.

3. Installation (1) according to Claim 1 or 2, the storage containers being aligned in two parallel rows delimiting a space in which the longitudinal movement axis/axes (71) of the first Cartesian robot is/are arranged.

4. Installation (1) according to one of Claims 1 to 3, wherein:
the structure of each storage column is a honeycomb structure of which the cells (200) extend along an axis (Y1) intersecting the longitudinal axis (Z1), each cell of a storage column being adapted to receive and house one of the plurality of containers (T) individually;
the second gripping member being adapted to grip a container individually,
the installation being configured so that iii/ the second gripping member retrieves any of the selected containers individually in the column pick-up position,
the installation preferably comprising:
a clamping device (8), carried by the vertical movement axis of the Cartesian robot, the clamping device being adapted to clampingly hold a storage column when the latter is at least partially retrieved from a storage container, and/or
a retrieval device (9), carried by the vertical movement axis of the Cartesian robot, the retrieval device being adapted to push any container from a cell of a storage column when the latter is at least partially retrieved from a storage container, the retrieval device preferably comprising one or more cylinders (90) as pushing means.

5. Installation (1) according to one of Claims 1 to 3, wherein:
the structure of each storage column is divided into a plurality of storage drawers, each adapted to receive translationally one of a plurality of the multi-compartment storage boxes, each compartment being adapted to house a container (10) in each case adapted to contain a biological sample or samples;
the second gripping member being adapted to grip a storage box individually;
the installation being configured so that iii/ the second gripping member retrieves any one of the selected storage boxes individually in the column pick-up position.

6. Installation (1) according to any one of the preceding claims, the first Cartesian robot being a three-axis robot, the third axis (73) being a lateral movement axis adapted to laterally move the first gripping member at least in line with any cell of the grid of any of the storage containers.

7. Installation (1) according to one of the preceding claims, comprising:
- at least one transfer tray (100), carried by the longitudinal movement axis of the first Cartesian robot and arranged in the circular movement zone of the at least five-axis robot, the transfer tray being adapted to house a plurality of storage boxes (11),
- a preparation station (12) from which an operator can bring one or more containers or one or more multi-compartment boxes,
the installation being configured so that the longitudinal movement axis of the first Cartesian robot can move the transfer tray in the preparation station, the preparation station preferably comprising a second Cartesian robot (13) with at least two axes, adapted to bring the containers or boxes into an airlock for the recovery of the biological samples by an operator.

8. Installation (1) according to one of the preceding claims, comprising measurement instrumentation means installed on each storage column structure, the instrumentation means preferably comprising at least one temperature sensor and/or at least one strain gauge and/or a radio-frequency identification means (RFID) and/or a transponder, more preferably at least two temperature sensors per storage column, one arranged at one longitudinal end and the other arranged at the opposite longitudinal end.

9. Installation (1) according to one of the preceding claims, comprising a floor or ceiling frame (70) that carries the first Cartesian robot or a gantry that carries the first Cartesian robot, suspended above the row(s) of storage containers.

10. Installation (1) according to one of the preceding claims, comprising an enclosure with a controlled environment comprising secure access, in particular to the preparation station for an operator from the outside, the enclosure being configured to house the plurality of storage containers and boxes, the plurality of storage columns, the storage containers, the at least five-axis robot, the gripping members, the Cartesian robot(s) and, if necessary, the frame or the gantry.

11. Installation according to one of the preceding claims, the storage containers in each case comprising a lid (31) to close the container (s) which is (are) in storage configuration, that is to say not concerned by the retrieval or, conversely, the insertion of a column therein.

12. Installation according to Claim 11, the control unit of the first Cartesian robot being adapted to control the opening and conversely the closing of each storage container.

13. Installation according to one of the preceding claims, the containers being storage tubes (10).

14. Installation according to one of the preceding claims, the storage container(s) being operated under cryogenic conditions, in particular with liquid nitrogen as a cold source.

15. Use of the installation (1) according to one of the preceding claims for storing biological samples under cryogenic conditions in an environmentally controlled enclosure.
